# EUROPEAN PATENT SPECIFICATION

(11) **EP 4 425 327 B1**
(45) Date of publication and mention of the grant of the patent: **01.04.2026**
(21) Application number: 23884011.0
(22) Date of filing: 27.02.2023
(51) Int. Cl.: G06F 9/38

(54) **DECODING METHOD, PROCESSOR, CHIP, AND ELECTRONIC DEVICE**
DECODIERUNGSVERFAHREN, PROZESSOR, CHIP UND ELEKTRONISCHE VORRICHTUNG
PROCÉDÉ DE DÉCODAGE, PROCESSEUR, PUCE ET DISPOSITIF ÉLECTRONIQUE

(30) Priority: 31.10.2022 CN 202211350246
(43) Date of publication of application: 04.09.2024
(73) Proprietor: HYGON INFORMATION TECHNOLOGY CO., LTD., Binhai New Area, Tianjin 300392 (CN)
(72) Inventor: CUI, Zehan, Tianjin 300392 (CN)
(74) Representative: Maiwald GmbH
(86) International application number: PCT/CN2023/078435
(87) International publication number: WO 2024/093063

(56) References cited:
- WO-A2-2018/063702
- CN-A- 107 358 125
- CN-A- 112 631 660
- CN-A- 114 090 077
- CN-A- 115 098 169
- CN-A- 115 525 344
- JP-A- H10 207 707
- US-A1- 2022 100 519
- US-B2- 8 103 831

## Description

### CROSS-REFERENCE TO RELATED APPLICATION

The present application claims the priority to Chinese Patent Application No. 202211350246.2, filed on October 31, 2022.

### TECHNICAL FIELD

Embodiments of the present disclosure relate to a decoding method, a processor, a chip, and an electronic device.

### BACKGROUND

In modem processors, instructions need to go through processes such as instruction fetching, instruction decoding, and executing, etc.; and instruction decoding is a process of parsing and translating an instruction fetched to obtain a micro-operation (micro-op, Uop). Instruction decoding is an important task of a processor, and how to improve decoding performance of the processor has always been a research topic for those skilled in the art. WO2018063702A2 discloses a system and method for load balancing in out-of-order clustered decoding. US8103831B2 discloses an efficient method and apparatus for employing a micro-op cache in a processor.

### SUMMARY

In view of this, the embodiments of the present disclosure provide a decoding method, a processor, a chip, and an electronic device to implement parallel decoding of instructions and obtain a micro-op sequence consistent with an instruction fetching order, thereby improving decoding performance of the processor.

To achieve the above objectives, the embodiments of the present disclosure provide the following technical solutions.

The embodiments of the present disclosure provide a decoding method, applied to a processor, and the method includes:
generating an instruction fetching request by a branch predicting unit, in which the instruction fetching request carries at least one switch tag, and the switch tag at least indicates an instruction position for performing decoder group switch;
an instruction cache acquiring an instruction stream fetched by the instruction fetching request in response to a micro-op being obtained as decoded by a decoder group, and determining the instruction position for performing decoder group switch in the instruction stream according to the switch tag carried by the instruction fetching request; allocating the instruction stream to a plurality of decoder groups for parallel decoding according to the instruction position; attaching the switch tag to a target micro-op obtained by decoding a target instruction, in which the target instruction is an instruction corresponding to the instruction position;
and acquiring a micro-op corresponding to the instruction fetching request from a micro-op cache, in response to a micro-op being obtained through searching by the micro-op cache, in a case where the instruction fetching request is hit in the micro-op cache, in which the processor includes a plurality of decoding modes, and the plurality of decoding modes include a decoder mode and a micro-op cache mode, the decoder mode is obtaining a micro-op through decoding by a decoder group, and the micro-op cache mode is obtaining a micro-op through searching by the micro-op cache, and the decoding method further includes: in the micro-op cache mode, the branch predicting unit sending the instruction fetching request carrying the at least one switch tag to the micro-op cache; and in the micro-op cache mode, determining a micro-op queue corresponding to a decoder group, according to whether a last instruction decoded by a decoder group has an instruction position indicated by a corresponding switch tag before the decode mode is switched to the micro-op cache mode, to store an obtained micro-op.

The embodiments of the present disclosure further provide a processor, including:
a branch predicting unit, configured to generate an instruction fetching request, in which the instruction fetching request carries at least one switch tag, and the switch tag at least indicates an instruction position for performing decoder group switch;
an instruction cache, configured to acquire an instruction stream fetched by the instruction fetching request in response to a micro-op being obtained as decoded by a decoder group, and determine the instruction position for performing decoder group switch in the instruction stream according to the switch tag carried by the instruction fetching request;
an instruction allocating unit, configured to allocate the instruction stream to a plurality of decoder groups for parallel decoding according to the instruction position;
a decoder group, configured to decode allocated instructions to obtain micro-ops, in which a total number of the decoder group is plural, and when the decoder group decodes a target instruction, a switch tag is attached to a target micro-op obtained by decoding the target instruction, and the target instruction is an instruction corresponding to the instruction position;
and a micro-op cache, configured to acquire a micro-op corresponding to the instruction fetching request from the micro-op cache, in response to a micro-op being obtained through searching by the micro-op cache, in a case where the instruction fetching request is hit in the micro-op cache, in which the micro-op acquired is not attached with the switch tag, in which the processor includes a plurality of decoding modes, and the plurality of decoding modes include a decoder mode and a micro-op cache mode, the decoder mode is obtaining a micro-op through decoding by a decoder group, and the micro-op cache mode is obtaining a micro-op through searching by the micro-op cache; in the micro-op cache mode, the branch predicting unit sends the instruction fetching request carrying the at least one switch tag to the micro-op cache; and in the micro-op cache mode, a micro-op queue corresponding to a decoder group is determined, according to whether a last instruction decoded by a decoder group has an instruction position indicated by a corresponding switch tag before the decode mode is switched to the micro-op cache mode, to store an obtained micro-op.

The embodiments of the present disclosure further provide a chip, including the processor mentioned above.

The embodiments of the present disclosure further provide an electronic device, including the chip mentioned above.

The decoding method provided by the embodiments of the present disclosure may be applied to a processor, at least one switch tag may be carried in an instruction fetching request, and the switch tag at least indicates an instruction position for performing decoder group switch. Thus, when responding to a micro-op being obtained as decoded by a decoder group, the processor may acquire an instruction stream fetched by the instruction fetching request, and determine the instruction position for performing decoder group switch in the instruction stream according to the switch tag carried by the instruction fetching request; further, allocate the instruction stream to a plurality of decoder groups for parallel decoding according to the instruction position; and attach the switch tag to a target micro-op obtained by decoding a target instruction; the target instruction is an instruction corresponding to the instruction position, such that micro-ops obtained as decoded by the plurality of decoder groups may be merged subsequently according to the switch tag attached to the target micro-op, to obtain micro-ops corresponding to an instruction fetching order. When responding to a micro-op being obtained through searching by a micro-op cache, in the case where the instruction fetching request is hit in the micro-op cache, the processor according to the embodiments of the present disclosure may not decode instructions through the decoder group, but instead acquire the micro-op corresponding to the instruction fetching request from the micro-op cache.

The embodiments of the present disclosure may allow in the processor having the micro-op cache and the decoder that, by carrying the switch tag in the instruction fetching request and at least indicating the instruction position for performing decoder group switch by the switch tag, in a decoder mode of obtaining the micro-op through decoding by the decoder group, the switch tag may be transparently transmitted through the target instruction and the target micro-op, to support parallel decoding by the plurality of decoder groups and merging of the decoded micro-ops according to an instruction fetching order of the instructions, thereby improving decoding efficiency; while in a micro-op cache mode of obtaining the micro-op through searching by the micro-op cache in the processor, the embodiments of the present disclosure may allow processing not based on the switch tag carried in the instruction fetching request, so as to be compatible with the micro-op cache mode of the processor. The embodiments of the present disclosure may support parallel decoding in the processor that supports the decoder mode and the micro-op cache mode, so as to improve decoding performance.

### BRIEF DESCRIPTION OF DRAWINGS

In order to clearly illustrate the embodiments of the present disclosure, the drawings of the embodiments will be briefly described. It is obvious that the described drawings in the following are only some embodiments of the present disclosure, and for those ordinarily skilled in the art, other drawings can be obtained on the basis of these provided drawings without inventive work.
FIG. 1A is a block diagram of an architecture of a processor;
FIG. 1B is a block diagram of another architecture of a processor;
FIG. 2A is a block diagram of an architecture of a processor provided by at least one embodiment of the present disclosure;
FIG. 2B is an optional flowchart of a decoding method provided by at least one embodiment of the present disclosure;
FIG. 2C is a block diagram of another architecture of a processor provided by at least one embodiment of the present disclosure;
FIG. 3A is a schematic diagram of splitting an instruction stream provided by at least one embodiment of the present disclosure;
FIG. 3B is a schematic diagram of merging micro-ops provided by at least one embodiment of the present disclosure;
FIG. 4A is a block diagram of an architecture of a processor having a micro-op cache;
FIG. 4B is a block diagram of another architecture of a processor provided by at least one embodiment of the present disclosure;
FIG. 5A is an optional schematic diagram of saving a micro-op in a micro-op cache mode provided by at least one embodiment of the present disclosure;
FIG. 5B is another optional schematic diagram of saving a micro-op in a micro-op cache mode provided by at least one embodiment of the present disclosure; and
FIG. 6 is another optional flowchart of a decoding method provided by at least one embodiment of the present disclosure.

### DETAILED DESCRIPTION

The technical solutions of the embodiments of the present disclosure will be described in a clearly and fully understandable way in connection with the drawings related to the embodiments of the present disclosure. Apparently, the described embodiments are just a part but not all of the embodiments of the present disclosure. Based on the described embodiments herein, those ordinarily skilled in the art can obtain other embodiment(s), without any inventive work, which should be within the scope of the disclosure.

An instruction is a command that controls a computer to perform an operation, also referred to as a machine instruction. The instruction plays a role in coordinating operation relationships between respective hardware components, reflects a basic function possessed by a computer, and is a smallest functional unit of computer operation. When a computer executes a certain operation command, the processor needs to process the instruction and transform the same into machine language that can be recognized by a machine. In the processor, pipeline technology is usually used to process instructions.

In a pipeline operation of a processor, an instruction needs to go through processing procedures such as instruction fetching, instruction decoding, and executing. Instruction fetching refers to fetching an instruction corresponding to program operation from a cache or a main memory of the processor; instruction decoding is decoding the fetched instruction to determine an operation code and/or an address code of the instruction; and the executing operation refers to executing the instruction operation according to the operation code and/or the address code obtained, to implement program operation. Due to presence of a branch instruction that changes a program stream in the instruction, in order to solve pipeline delay caused by the processor having to wait for an execution result of the branch instruction to determine a next instruction fetching when processing the branch instruction, a front end of the pipeline where the processor processes the instruction may also be provided with a branch predicting unit to implement branch prediction of the instruction.

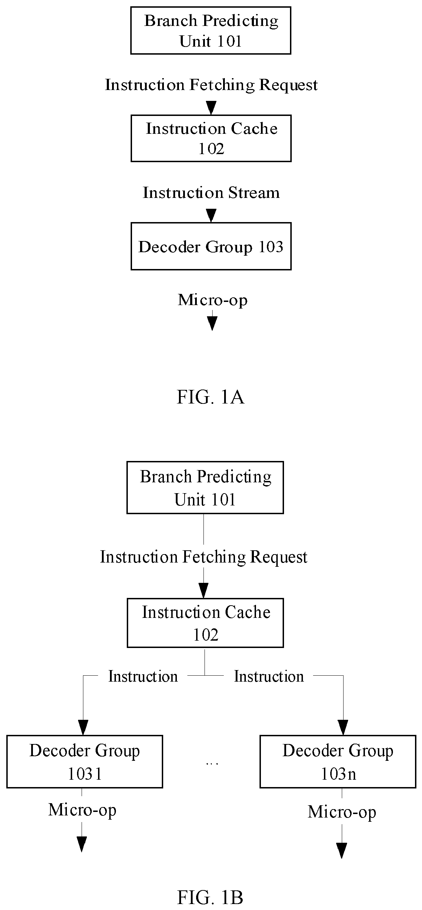

FIG. 1A exemplarily shows a block diagram of an architecture of a processor, and the processor includes a branch predicting unit 101, an instruction cache 102, and a decoder group 103.

The branch predicting unit 101 is a digital circuit that may perform branch prediction on the instruction and generate an instruction fetching request based on a branch prediction result. The branch prediction result is, for example, whether the current instruction is a branch instruction, a branch result (direction, address, target address, etc.) of the branch instruction, etc. In one implementation, the branch predicting unit may perform branch prediction on the instruction based on historical execution information and a result of the branch instruction, so as to obtain an instruction fetching address range of the instruction and generate an instruction fetching request. The instruction fetching request generated by the branch predicting unit includes instruction fetching addresses of a plurality of instructions, for reading corresponding instructions from the instruction cache 102.

The instruction cache 102 has an instruction stored therein, and the instruction cache 102 mainly stores the instruction through an instruction cache block. In the instruction cache, each instruction cache block corresponds to a tag, for identifying the instruction cache block in the instruction cache, so that the instruction cache may find a corresponding instruction cache block based on the tag during instruction fetching according to the instruction fetching request. The instruction fetching address generated by the branch predicting unit may correspond to a plurality of instructions, and the plurality of instructions may form an instruction stream. Optionally, the instruction cache 102 may be a cache portion located in a Level I cache in the processor for storing instructions. The instruction fetching address generated by the branch predicting unit may correspond to a plurality of instructions,

It should be noted that there are a tag region (an address identification region) and an index region (an address index region) in the instruction fetching address generated by the branch predicting unit; by using the index region in the instruction fetching address, tags of a plurality of instruction cache blocks may be read from the instruction cache, and then the read tags of the plurality of instruction cache blocks of the instruction cache may be matched with the tag of the instruction fetching address for judgment, to obtain a storage position of the instruction corresponding to the instruction fetching address in the instruction cache (i.e., a position of the instruction cache block), so as to read a corresponding instruction.

The decoder group 103 is capable of parsing and translating the instruction, and through the decode operation performed by the decoder group on the instruction, a decoded instruction may be obtained. The decoded instruction may be machine executable operation information obtained by translating the instruction, for example, a machine executable micro-op (Uop or microinstruction) formed by a control field; that is, the decoder can decode the instruction, so as to obtain the micro-op.

The processor architecture shown in FIG. 1A uses a single decoder group to decode the instruction, which is limited by throughput of the decoder group, making it difficult to effectively improve the efficiency of instruction decoding. Based on this, a processor that uses a plurality of decoder groups to perform parallel decoding on instructions has emerged. FIG. 1B exemplarily shows a block diagram of another architecture of the processor. Combining FIG. 1A and FIG. 1B, the processor shown in FIG. 1B is provided with a plurality of decoder groups 1031 to 103n, and a specific value of n may be determined according to specific design of the processor, which will not be limited in the embodiments of the present disclosure. Based on the plurality of decoder groups 1031 to 103n provided by the processor, the instruction cache 102 may allocate the instruction stream fetched based on the instruction fetching request to the plurality of decoder groups for decoding, so that the plurality of decoder groups perform parallel decoding on the instructions and respectively output decoded micro-ops, so as to improve the efficiency of instruction decoding.

In one example, the plurality of decoder groups may be two decoder groups, for example, may be decoder group 0 and decoder group 1, respectively. While decoder group 0 is performing a decoding operation on instructions, decoder group 1 may also perform a decoding operation on instructions; for example, within one clock cycle of the processor, decoder group 0 and decoder group 1 are capable of simultaneously performing decoding operations on instructions and obtaining micro-ops, so as to implement parallel decoding on the instructions. Meanwhile, decoder group 0 and decoder group 1 may decode not in an order of the instructions, but may support parallel decoding for instructions. It should be noted that in practical applications, the processor may set up more than two decoder groups as needed; and for ease of understanding, the embodiments of the present disclosure only show an example of two decoder groups.

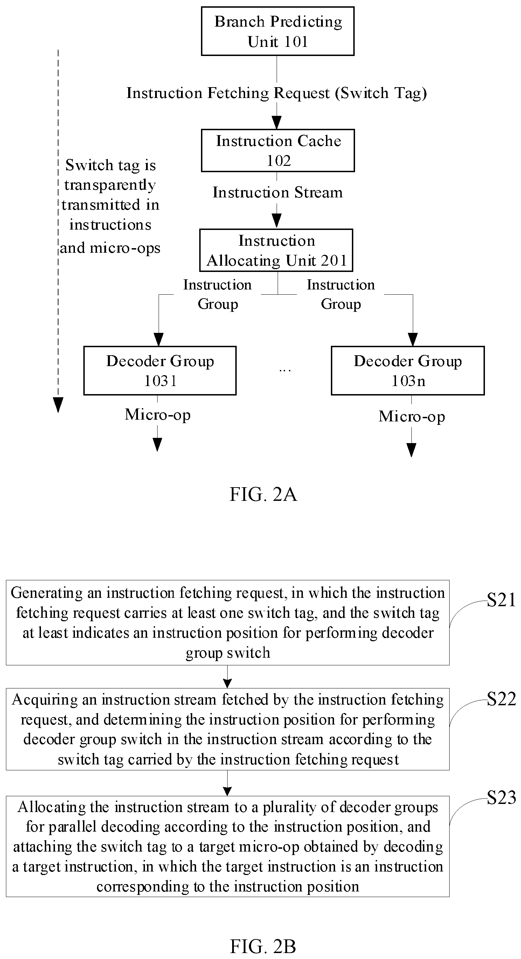

However, a plurality of decoder groups performing parallel decoding on instructions is different from a single decoder group performing sequential decoding on instructions; more complex situations have to be confronted for the case of a plurality of decoder groups performing parallel decoding on instructions, for example, how to allocate the instruction stream fetched by the instruction cache to the plurality of decoder groups, and how to merge the micro-ops obtained as decoded by the plurality of decoder groups so that micro-ops ultimately executed correspond to an instruction fetching order of instructions. To address the above-described problems, the embodiments of the present disclosure provide a further improved processor architecture, and FIG. 2A exemplarily shows a block diagram of an architecture of a processor provided by at least one embodiment of the present disclosure. Combining FIG. 1B and FIG. 2A, the processor shown in FIG. 2A is further provided with an instruction allocating unit 201, which is configured to split the instruction stream fetched by the instruction cache 102, so as to obtain a plurality of instruction groups allocated to the decoder groups for parallel decoding; meanwhile, in order to provide a basis for splitting of the instruction stream, the embodiment of the present disclosure has a switch tag carried in the instruction fetching request, and the switch tag may at least indicate an instruction position for performing decoder group switch; and thus, by transparently transmitting the switch tag to the instruction cache and fetching the instruction stream according to the instruction fetching request, the instruction allocating unit 201 may split the instruction stream according to the instruction position for performing decoder group switch, allocate the plurality of instruction groups after splitting the instruction stream to the plurality of decoder groups for parallel decoding, and provide technical support for parallel decoding of instructions in the plurality of decoder groups. Further, the switch tag may also be transparently transmitted to micro-ops through instructions corresponding to the instruction position, so that after decoding to obtain the micro-ops, the respective decoder groups can merge the micro-ops based on the switch tag in the micro-ops, and provide technical support that a merged result of the micro-ops may correspond to the instruction fetching order.

As an optional implementation, FIG. 2B exemplarily shows an optional flowchart of a decoding method provided by at least one embodiment of the present disclosure. The decoding method may be considered a method flow of the processor in a case of decoding by using a decoder group, that is, a method flow of obtaining the micro-op through decoding by the decoder group. Referring to FIG. 2B, the method flow may include steps below.

Step S21: generating an instruction fetching request, in which the instruction fetching request carries at least one switch tag, and the switch tag at least indicates an instruction position for performing decoder group switch.

In some embodiments, the instruction fetching request generated by the branch predicting unit may carry a switch tag. When the branch predicting unit performs branch prediction, the branch prediction direction is mainly grouped into two types: branch instruction jumping and branch instruction not jumping; correspondingly, the instruction fetching addresses generated by the branch predicting unit may be grouped into two types: an instruction fetching address corresponding to a branch prediction direction of jumping, and an instruction fetching address corresponding to a branch prediction direction of not jumping. As an optional implementation, in the embodiments of the present disclosure, a switch tag may be set according to an address position corresponding to the branch prediction direction of jumping, and an instruction fetching request carrying at least one switch tag is generated.

In some embodiments, the switch tag may also be set through other mechanisms, but not limited to the case that the switch tag is set by the branch predicting unit in the instruction fetching request based on a branch prediction situation. As an optional implementation, after the branch predicting unit generates an instruction fetching request (without carrying a switch tag), the embodiments of the present disclosure may utilize other devices in the processor (e.g., the instruction cache) to set a switch tag in the instruction fetching request. In an implementation example, the instruction cache may set a switch tag in the instruction fetching request based on an instruction boundary after acquiring the instruction fetching request from the branch predicting unit; and the instruction boundary may represent an end position of the instruction.

Step S22: acquiring an instruction stream fetched by the instruction fetching request, and determining the instruction position for performing decoder group switch in the instruction stream according to the switch tag carried by the instruction fetching request.

The instruction cache acquires the instruction fetching request of the branch predicting unit, and fetches instructions according to the instruction fetching address in the instruction fetching request, so as to obtain the instruction stream corresponding to the instruction fetching request. In the case where the instruction fetching request carries a switch tag, and the switch tag at least indicates the instruction position for performing decoder group switch, then the instruction position for performing decoder group switch in the instruction stream may be determined according to the switch tag carried by the instruction fetching request.

It may be understood that an instruction stream is an instruction sequence including a plurality of instructions; and when there is no clear boundary in the instruction sequence, the end position of instructions in the instruction sequence cannot be determined. In the embodiments of the present disclosure, by determining the instruction position for performing decoder group switch in the instruction stream according to the switch tag carried by the instruction fetching request, the boundary of the instruction stream may be determined, and then the instruction position may be served as the end position. In the case where the instruction corresponding to the instruction position is served as a target instruction, the instruction position is an end position of the target instruction, so that the end position of the target instruction in the instruction stream may be determined according to the instruction position indicated by the switch tag carried by the instruction fetching request.

It should be noted that because the switch tag is used to at least indicate the instruction position for performing decoder group switch, the setting position in the instruction fetching request will not affect the instruction stream fetched by the instruction cache, nor will it cause damage to a structure of the instruction stream fetched. Moreover, specific setting position and representation form of the switch tag will not be limited in the embodiments of the present disclosure, for example, may be represented by an indicator field that exists outside the instruction stream fetched by the instruction cache or through a switch tag indicator.

Step S23: allocating the instruction stream to a plurality of decoder groups for parallel decoding according to the instruction position; and attaching the switch tag to a target micro-op obtained by decoding a target instruction, in which the target instruction is an instruction corresponding to the instruction position.

In some embodiments, based on the instruction stream fetched by the instruction cache, the instruction allocating unit may allocate the instruction stream to the plurality of decoder groups according to the instruction position (i.e., the instruction position for performing decoder group switch) for parallel decoding. In an optional example, the instruction allocating unit may split the instruction stream according to the instruction position to obtain a plurality of instruction groups, and further allocate the plurality of instruction groups to the plurality of decoder groups for parallel decoding.

Further, in some embodiments, the instruction allocating unit splitting the instruction stream according to the instruction position may be splitting the instruction stream into a plurality of instruction groups with the instruction position as a boundary in the instruction stream, and a target instruction that serves as a boundary in two adjacent instruction groups is grouped into a previous instruction group. Thus, when allocating the instruction stream to the plurality of decoder groups for parallel decoding, the instruction allocating unit may allocate a decoder group for a next instruction group according to a switch tag corresponding to the target instruction grouped into the previous instruction group, and the decoder group allocated for the previous instruction group is different from the decoder group allocated for the next instruction group; for example, the switch tag corresponding to the target instruction may be a switch tag corresponding to an end position indicating the target instruction.

It should be noted that after the plurality of decoder groups perform decoding operations on the allocated instruction groups to obtain micro-ops, in order to merge the micro-ops decoded by the plurality of decoder groups in the instruction fetching order, in the embodiments of the present disclosure, a switch tag may be attached to a target micro-op obtained by decoding the target instruction, through parsing and translating the target instruction corresponding to the instruction position. As an optional implementation, the target micro-op obtained by decoding the target instruction may be a combination of two micro-ops, one of which is a micro-op not attached with a switch tag and the other is a micro-op attached with a switch tag.

In some embodiments, after obtaining the micro-ops decoded by the plurality of decoder groups, in the embodiments of the present disclosures, the micro-ops obtained as decoded by the plurality of decoder groups may be further merged according to the switch tag attached to the target micro-op to obtain the micro-ops corresponding to the instruction fetching order. It may be understood that in order to implement complete operation of the program, it is necessary to merge the micro-ops obtained as decoded by the plurality of decoder groups, and an order of the micro-op sequence obtained after merging the micro-ops must also correspond to the instruction fetching order.

In the embodiments of the present disclosure, in the case of the instruction fetching request carrying the switch tag, the switch tag at least indicates the instruction position for performing decoder group switch. Thus, the instruction stream fetched by the instruction fetching request may be acquired; the instruction position for performing decoder group switch in the instruction stream may be determined according to the switch tag carried by the instruction fetching request; further, according to the instruction position, the instruction stream may be allocated to the plurality of decoder groups for parallel decoding; and the switch tag is attached to the target micro-op obtained by decoding the target instruction, and the target instruction is an instruction corresponding to the instruction position. In the embodiments of the present disclosure, the instruction position for performing decoder group switch may be indicated by the switch tag, and the switch tag is transparently transmitted from the instruction fetching request to the instruction position in the fetched instruction stream, so as to implement splitting the fetched instruction stream based on the instruction position and allocating the same to the plurality of decoder groups for parallel decoding, which effectively improves decoding efficiency of the processor. Further, in the embodiments of the present disclosure, the switch tag may be transparently transmitted into the target micro-op by parsing and translating the target instruction serving as the boundary; after obtaining the micro-ops decoded by the plurality of decoder groups, the micro-ops obtained as decoded by the plurality of decoder groups may be merged according to the switch tag, to obtain the micro-ops corresponding to the instruction fetching order, for accurate execution of the micro-ops.

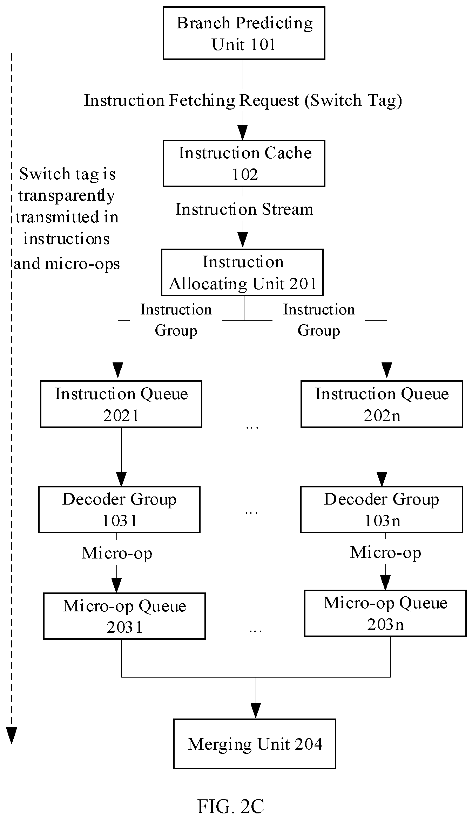

In some embodiments, FIG. 2C shows a block diagram of another architecture of a processor provided by at least one embodiment of the present disclosure. Combining FIG. 2A and FIG. 2C, in the processor shown in FIG. 2C, the respective decoder groups are provided with corresponding instruction queues and micro-op queues, for example, decoder groups 1031 to 103n are respectively provided with instruction queues 2021 to 202n and micro-op queues 2031 to 203n; and one decoder group corresponds to one instruction queue and one micro-op queue. The instruction queue of the decoder group is used to save an instruction group allocated by the instruction allocating unit to the decoder group, that is, the instruction queue may save instructions to be decoded by the decoder group; for example, instruction queue 2021 saves instructions to be decoded by decoder group 1031, and so on, instruction queue 202n saves instructions to be decoded by decoder group 103n; when implementing parallel decoding by the plurality of decoder groups, as long as a speed at which the instruction queues of the respective decoder groups save instructions to be decoded is faster than a decoding speed of the decoder group, the decoder group may continuously acquire instructions from the instruction queue for decoding, thereby implementing parallel decoding by the plurality of decoder groups. The micro-op queue of the decoder group is used to save micro-ops obtained as decoded by the decoder group; for example, micro-op queue 2031 saves micro-ops obtained as decoded by decoder group 1031, and so on, micro-op queue 203n saves micro-ops obtained as decoded by decoder group 103n. To merge the micro-ops obtained as decoded by the respective decoder groups, the processor is further provided with a merging unit 204; the merging unit 204 may read instructions from the plurality of micro-op queues and merge the same, so that an order of the merged micro-ops corresponds to the instruction fetching order.

Based on the principle of the method flow shown in FIG. 2B, the processor architecture shown in FIG. 2C may transparently transmit the switch tag in the instruction fetching request to the micro-op through the corresponding instruction during the decoding process, to implement parallel decoding by the plurality of decoder groups, and the micro-ops are merged in the instruction fetching order. An optional specific process is shown below.

The branch predicting unit 101 generates an instruction fetching request carrying a switch tag, and sends the instruction fetching request to the instruction cache 102, to read a corresponding instruction stream according to the instruction fetching request in the instruction cache 102. The switch tag of the instruction fetching request indicates the instruction position for performing decoder group switch, without affecting the instruction fetching address searching for the instruction corresponding to the instruction position in the instruction cache.

The instruction cache 102 reads the instruction stream according to the instruction fetching address of the instruction fetching request, and the switch tag carried by the instruction fetching request does not affect the fetched instructions of the instruction cache. After reading the instruction stream, the instruction cache 102 may determine the instruction position for performing decoder group switch in the instruction stream according to the switch tag carried by the instruction fetching request.

The instruction allocating unit 201 splits the instruction stream according to the instruction position, to obtain a plurality of instruction groups, and allocates the plurality of instruction groups to instruction queues 2021 to 202n corresponding to decoder groups 1031 to 103n. As an optional implementation, the number of instruction positions indicated by the switch tag may be plural, so that the number of instruction positions determined in the instruction stream may be plural; when splitting the instruction stream, the instruction allocating unit may perform one split when one of the instruction positions is recognized in the instruction stream, group a target instruction corresponding to the instruction position into a previous instruction group, and allocate a decoder group for a next instruction group according to the switch tag corresponding to the target instruction grouped into the previous instruction group; and the decoder group allocated for the previous instruction group is different from the decoder group allocated for the next instruction group. **In** this way, with the instruction position as a boundary, the instruction stream is split into the plurality of instruction groups, and the plurality of instruction groups are allocated to the plurality of decoder groups for parallel decoding.

In some embodiments, based on the instruction queue that is set corresponding to the decoder group and is used for saving instructions to be decoded, the instruction allocating unit 201 may save a first instruction group among the plurality of instruction groups to an instruction queue corresponding to a default decoder group; with respect to a non-first instruction group among the plurality of instruction groups, the instruction allocating unit 201 may determine a decoder group from the plurality of decoder groups that is different from the decoder group allocated for the previous instruction group, according to the switch tag corresponding to the target instruction in the previous instruction group, and then save the non-first instruction group to the instruction queue corresponding to the determined decoder group.

In an optional implementation of allocating non-first instruction groups among the plurality of instruction groups to decoder groups, the decoder groups allocated for the respective non-first instruction groups are sequentially determined from the plurality of decoder groups, in an order of the plurality of decoder groups, according to the switch tag corresponding to the target instruction in a previous instruction group of a non-first instruction group. For example, in the case where the first decoder group 1031 is a default decoder group, the first instruction group after instruction stream splitting is allocated to the decoder group 1031, and then the respective non-first instruction groups are sequentially allocated to decoder groups after the decoder group 1031 in the order of the decoder groups, until decoder group 103n.

It may be understood that the allocation principle may be that the instruction allocating unit allocates the decoder groups for the instruction groups in an order of decoder groups, and a decoder group different to the decoder group allocated for the previous instruction group is allocated for the next instruction group, according to the switch tag corresponding to the target instruction in the previous instruction group, so as to reasonably allocate instruction groups in the instruction queues corresponding to the decoder groups, which ensures that the plurality of decoder groups may read instructions to be decoded in a corresponding instruction queue, and implements parallel decoding of the plurality of decoder groups.

It should be noted that in another optional implementation, the switch tag may further include information about a decoder group to be switched to, for specifically indicating the decoder group to be switched to. Thus, the instruction allocating unit is capable of allocating a specific decoder group for the next instruction group based on the switch tag corresponding to the target instruction in the previous instruction group, to implement allocating decoder groups for instruction groups without following the order of the decoder groups. For example, with respect to decoder groups 1031 to 103n, according to an order in which switch tags appear, in the case where information of decoder group 103n is recorded in a first switch tag, after allocating the first instruction group to the default decoder group, decoder group 103n specifically indicated by the first switch tag is allocated for the next instruction group, for which decoding is performed by decoder group 103n; and in the case where the next switch tag specifically indicates decoder group 1031, the decoder group allocated for the next instruction group is decoder group 1031, for which decoding is performed by decoder group 1031. In this way, the instruction allocating unit allocates a corresponding decoder group for an instruction group according to a decoder group to be switched as specifically indicated in the switch tag, until the instruction groups are allocated completely.

It should be further noted that the default decoder group may be the first decoder group allocated in order, or may also be a decoder group whose allocation is specified by the processor, which will not be limited by the present disclosure.

With further reference to FIG. 2C, decoder groups 1031 to 103n correspondingly save the decoded micro-ops in micro-op queues 2031 to 203n; and in the case where the decoded instruction is a target instruction, decoder groups 1031 to 103n may perform decoding to obtain a target micro-op corresponding to the target instruction, and attach a switch tag to the target micro-op according to the instruction position corresponding to the switch tag in the target instruction.

The merging unit 204 reads micro-ops from micro-op queues 2031 to 203n, and merges the read micro-ops, to obtain a micro-op sequence that may be executed. When the micro-ops in micro-op queues 2031 to 203n are merged by the merging unit 204, the merging unit 204 may sequentially read the micro-ops in micro-op queues 2031 to 203n for merging based on the switch tag attached to the target micro-op. For example, the merging unit reads micro-ops in micro-op queue 2031, in the order of micro-op queues; when reading a target micro-op attached with a switch tag in micro-op queue 2031, sequentially switches to a next micro-op queue after micro-op queue 2031 and reads micro-ops in the micro-op queue; and when reading a target micro-op attached with a switch tag in the micro-op queue, continues to switch to a next micro-op queue to read micro-ops, and so on, until the micro-ops are read completely.

In some embodiments, the merging unit reads a first micro-op queue of the micro-ops, which may correspond to a first instruction queue allocated among the instruction group (e.g., a micro-op queue and an instruction queue belonging to the same decoder group); in one example, in the case where the instruction allocating unit allocates the first instruction group to instruction queue 2021 corresponding to decoder group 1031, the merging unit, when merging the micro-ops, firstly reads micro-ops in micro-op queue 2031, to provide support such that the merged micro-op queue is capable of corresponding to the instruction fetching order.

In other embodiments, the switch tag corresponding to the target instruction may further specifically indicate the decoder group to be switched to, and the switch tag attached to the target micro-op obtained by decoding the target instruction may specifically indicate the micro-op queue to be switched to. Thus, when merging the micro-ops, the merging unit may read the micro-op queue in a switching manner based on the switch tag attached to the target micro-op, so as to read without following the order of the micro-op queue. In an example, assuming that the target micro-op exists in micro-op queue 2031, and the switch tag attached to the target micro-op specifically indicates that the micro-op queue to be switched to is 203n, the merging unit, when reading the switch tag attached to the target micro-op in micro-op queue 2031, may switch to micro-op queue 203n to continue to read micro-ops; and when the switch tag attached to the target micro-op is read in micro-op queue 203n, which specifically indicates that the micro-op queue to be switched to is 2031, the merging unit switches to micro-op queue 2031 to read micro-ops.

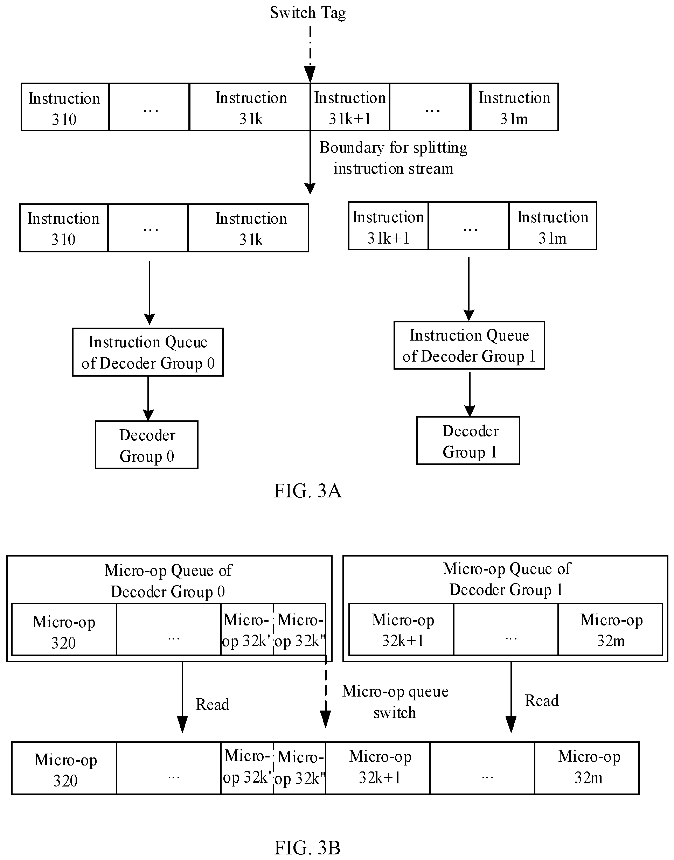

To facilitate understanding the principle of splitting the instruction stream based on the instruction position for performing decoder group switch in the instruction stream, hereinafter, it will be introduced by taking two decoder groups as an example. FIG. 3A exemplarily shows a schematic diagram of splitting an instruction stream. As shown in FIG. 3A, the instruction stream includes instructions 310 to 31m, where m represents the number of instructions in the instruction stream, which may be determined according to actual situations, and will not be limited in the embodiments of the present disclosure. In instructions 310 to 31m, the instruction position indicated by the switch tag for performing decoder group switch is shown by a dashed arrow in the diagram, then instruction 31k corresponding to the instruction position may be a target instruction, and the instruction position may be an end position of the target instruction 31k, and the switch tag may be set, for example, through a branch predicting unit.

As shown in FIG. 3A, in the embodiments of the present disclosure, the instruction position may be served as the boundary for splitting the instruction stream, to split instruction stream 310 to 31m. Target instruction 31k is adjacent to instruction 31k+1; when splitting the instruction stream according to the instruction position, target instruction 31k is grouped into the previous instruction group (i.e., instruction 310 to instruction 31k are taken as a group), and instruction 31k+1 is grouped into the next instruction group (i.e., instruction 31k+1 to instruction 31m are taken as a group), to obtain two adjacent different instruction groups. When the number of switch tags is plural, the number of instruction positions in the instruction stream is plural, and the number of the corresponding target instructions is also plural; and the instruction stream may be split in the mode to obtain a plurality of instruction groups.

Referring to FIG. 3A, in the embodiments of the present disclosure, the first instruction group after splitting (i.e., instruction 310 to target instruction 31k) may be allocated to an instruction queue corresponding to decoder group 0 in an order of decoder group 0 and decoder group 1, and decoder group 0 performs a decoding operation on instruction 310 to target instruction 31k. Because target instruction 31k is an instruction corresponding to the instruction position for performing decoder group switch, a decoder group different from decoder group 0 needs to be allocated for instructions after target instruction 31k, so that the instruction group from instruction 31k+1 to instruction 31m is allocated to the instruction queue corresponding to decoder group 1; and decoder group 1 performs a decoding operation on instruction 31k+1 to instruction 31m.

To facilitate understanding the principle of merging the micro-ops, based on a micro-op attached with a switch tag, hereinafter, it will be introduced by taking two decoder groups as an example. FIG. 3B exemplarily shows a schematic diagram of merging micro-ops.

Decoder group 0 decodes an instruction group from instruction 310 to target instruction 31k, to obtain micro-op 320 to target micro-op 32k (not shown), decoder group 0 parses and translates target micro-op 31k, to obtain target micro-op 32k, which is a combination of micro-op 32k' and micro-op 32k"; micro-op 32k' is a micro-op not attached with a switch tag, and micro-op 32k" is a micro-op attached with a switch tag. Decoder group 1 decodes an instruction group from instruction 31k+1 to instruction 31m, to obtain micro-op 32k+1 to micro-op 32m. Micro-op 320 to target micro-op 32k are saved in a micro-op queue of decoder group 0, and micro-op 32k+1 to micro-op 32m are save in a micro-op queue of decoder group 1.

When merging the micro-ops, the micro-ops may be read from the micro-op queue of decoder group 0 firstly in an order of decoder groups; when reading micro-op 32k" attached with a switch tag in target micro-op 32k, it switches to the micro-op queue of decoder group 1 to read the micro-ops, that is, when reading the micro-op with a switch tag attached with a switch tag from the currently read micro-op queue, it switches to a next micro-op queue to read micro-ops, until the micro-ops are read completely. Because the fetched instruction stream is split according to the instruction position indicated by the switch tag in the target instruction and allocated to the plurality of decoder groups for parallel decoding, when reading the micro-ops obtained through decoding, the micro-ops may be read in a switched manner between the micro-op queues of the plurality of decoder groups according to the switch tag attached to the target micro-op, so that the read micro-ops may correspond to the instruction fetching order.

It is described above that in the case where the processor has a plurality of decoder groups, the instruction position for performing decoder group switch is indicated by the switch tag of the instruction fetching request, and the switch tag is transparently transmitted through the target instruction in the instruction stream to the micro-op obtained as decoded by the decoder group, according to the instruction fetching request, so as to support parallel decoding by the plurality of decoder groups and sequential merging of micro-ops, which effectively improves decoding efficiency of the processor. Although the plurality of decoder groups of the processor may implement parallel decoding of instructions, yet it has to undergo the process of instruction fetching and decoding so as to obtain micro-ops, which makes the process of obtaining micro-ops more cumbersome; based on this, in order to improve the speed of acquiring micro-ops, the embodiments of the present disclosure further provide a high-performance processor having a Micro-Op Cache (OC).

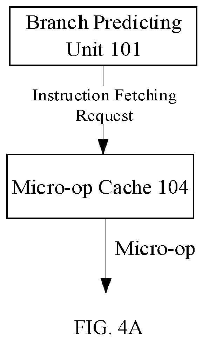

FIG. 4A shows a block diagram of an architecture of a processor having a micro-op cache. As shown in FIG. 4A, the branch predicting unit 101 issues the generated instruction fetching request to the micro-op cache 104. The micro-op cache 104 may be configured to cache micro-ops. In some embodiments, the micro-op cache 104 may include a plurality of table entries, and each table entry may accommodate a plurality of micro-ops. The instruction fetching request generated by the branch predicting unit 101 may correspond to a plurality of micro-op cache table entries.

When acquiring micro-ops in the micro-op cache based on the instruction fetching request generated by the branch predicting unit, the micro-op cache may make a hit judgment between a start address of the instruction fetching request and an address of a first micro-op of all table entries; if hit, a micro-op in a first table entry is obtained. When an end address of the last micro-op in the micro-op cache table entry is less than an end address of an address range of the instruction fetching request, the end address in the address range corresponding to the last micro-op needs to be used, to further make a hit judgment with the address of the first micro-op in all table entries; if hit, a micro-op in a second table entry is obtained. The above-described process is repeated until the end address of the address range in the instruction fetching request is less than the end address of the last micro-op in the table entry, and then the micro-ops may be read from the micro-op cache based on the instruction fetching request.

In some embodiments, when all the addresses in the instruction fetching request generated by the branch predicting unit may be hit in the micro-op cache, the micro-op cache is capable of outputting corresponding micro-ops; and when the start address in the instruction fetching request generated by the branch predicting unit fails to be hit in the micro-op cache table entry, the micro-op cache is incapable of outputting micro-ops.

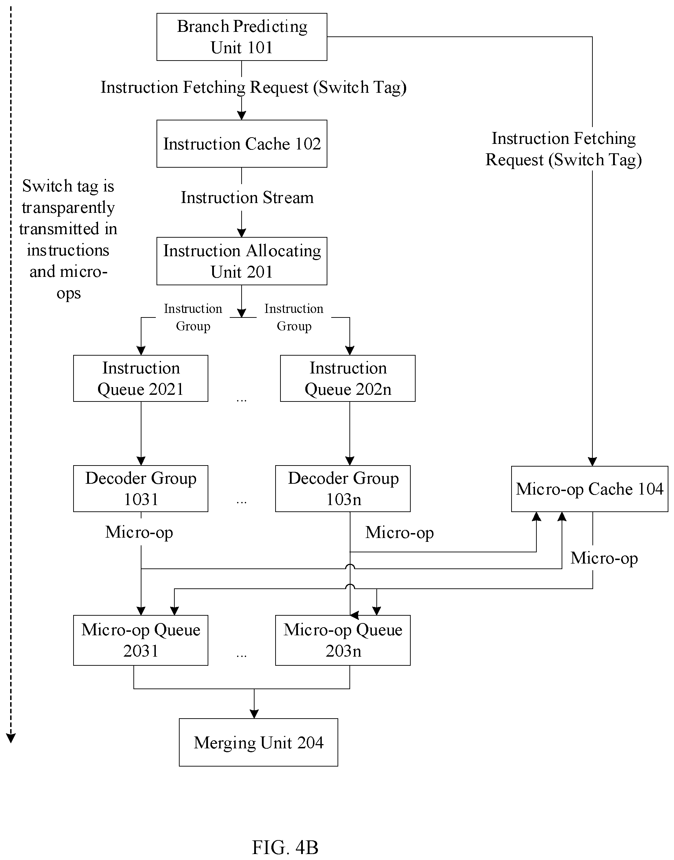

Based on the processor having the micro-op cache and the decoder group, the processor may include a variety of decoding modes, and the variety of decoding modes include a decoder mode and a micro-op cache mode, the decoder mode is obtaining a micro-op through decoding by the decoder group, and the micro-op cache mode is obtaining a micro-op through searching by the micro-op cache. FIG. 4B exemplarily shows a block diagram of another architecture of a processor provided by at least one embodiment of the present disclosure.

As shown in FIG. 4B, the processor according to the embodiment of the present disclosure may be compatible with the decoder mode and the micro-op cache mode; the instruction fetching request carrying the switch tag generated by the branch predicting unit 101 may obtain a micro-op through two paths; and the two paths may respectively be a path of obtaining a micro-op through decoding by the decoder group (corresponding to the decoder mode) and a path of obtaining a micro-op through searching by the micro-op cache (corresponding to the micro-op cache mode).

In response to the micro-op being obtained as decoded by the decoder group, that is, in the decoder mode, the branch predicting unit 101 issues an instruction fetching request carrying a switch tag to the instruction cache 102; the instruction cache 102 fetches an instruction stream according to an address in the instruction fetching request; and the instruction allocating unit 201 splits the instruction stream according to an instruction position in the instruction stream to obtain a plurality of instruction groups, and allocate the obtained plurality of instruction groups to instruction queues 2021 to 202n corresponding to the plurality of decoder groups. The plurality of decoder groups 1031 to 103n read the instructions to be decoded in instruction queues 2021 to 202n respectively corresponding thereto and perform decoding operations to obtain micro-ops, further save the decoded micro-ops into corresponding micro-op queues, and based on existence of the micro-op cache 104, may further cache the decoded micro-ops into the micro-op cache.

In response to a micro-op being obtained through searching by the micro-op cache, that is, in the micro-op cache mode, the branch predicting unit 101 issues an instruction fetching request carrying a switch tag to the micro-op cache 104, so that the micro-op cache may correspondingly output a micro-op, based on hit of the instruction fetching request in the micro-op cache, and based on existence of the micro-op queue, is capable of saving the acquired micro-op to a micro-op queue corresponding to a default decoder group.

In some embodiments, if the instruction fetching request is hit in the micro-op cache, the acquired micro-op is saved to the micro-op queue corresponding to the default decoder group; the micro-op queue corresponding to the default decoder group may be a micro-op queue corresponding to a first decoder group determined in order, or may also be a micro-op queue corresponding to a decoder group specified by the processor, or may also be a micro-op queue corresponding to the decoder group, determined according to whether the last instruction decoded by the decoder group has an instruction position indicated by a corresponding switch tag before the decoding mode is switched to the micro-op cache mode.

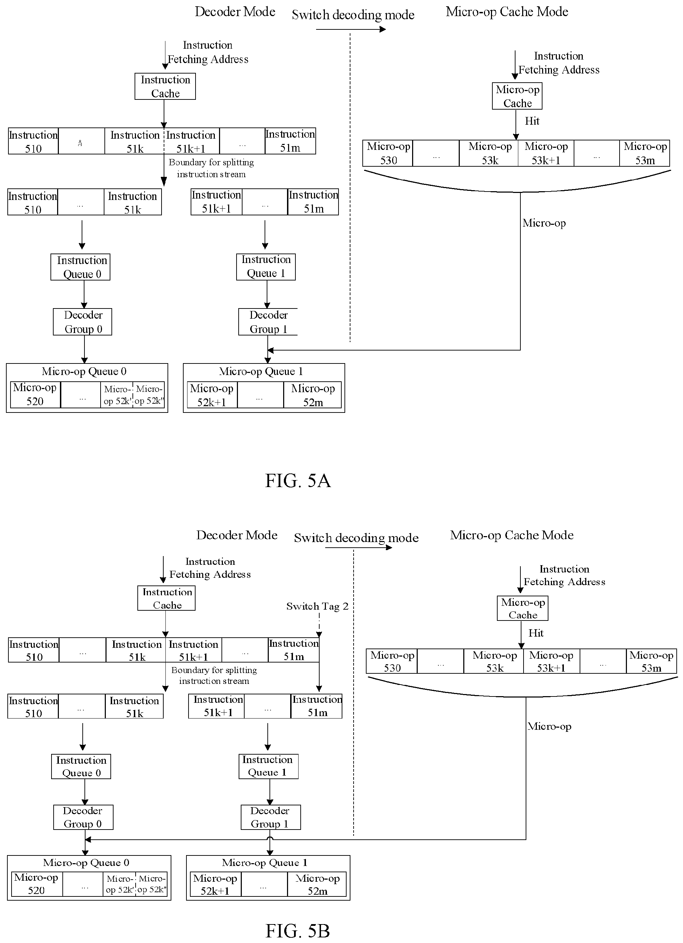

As an optional implementation, when the last instruction decoded by the decoder group does not have an instruction position indicated by a corresponding switch tag before the decoding mode of the processor is switched to the micro-op cache mode, the micro-op read in the micro-op cache is saved to a micro-op queue corresponding to a decoder group decoding the last instruction before switching the decoding mode. FIG. 5A is an optional schematic diagram of saving a micro-op in a micro-op cache mode switched to according to at least one embodiment of the present disclosure; as shown in FIG. 5A, in the decoder mode, the instruction stream (i.e., instruction 510 to instruction 51m) is read in the instruction cache according to the instruction fetching request, and the switch tag indicates an instruction position for performing decoder group switch, as shown by a dashed line in the diagram, then instruction 51k corresponding to the instruction position is a target instruction, and an end position of the instruction stream does not have an instruction position for performing decoder group switch; the instruction stream is split according to the instruction position to obtain two adjacent different instruction groups (i.e., instruction 510 to instruction 51k and instruction 51k+1 to instruction 51m), which are allocated to corresponding decoder groups; moreover, the last instruction 51m is decoded by decoder group 1 to obtain micro-op 52m not attached with a switch tag, which is saved in the corresponding micro-op queue 1. When the decoding mode is switched to the micro-op cache mode, the instruction fetching address is searched and in the micro-op cache and is hit, the micro-ops (i.e., micro-op 530 to micro-op 53m) are read; and micro-op 530 to micro-op 53m read are saved in micro-op queue 1.

As another optional implementation, when the last instruction decoded by the decoder group has an instruction position indicated by a corresponding switch tag before the decoding mode of the processor is switched from the decoder mode to the micro-op cache mode, the micro-op read in the micro-op cache is saved to the micro-op queue corresponding to the decoder group switched to as indicated by the switch tag according to the switch tag corresponding to the last instruction. FIG. 5B is another optional schematic diagram of saving a micro-op in a micro-op cache mode switched to according to at least one embodiment of the present disclosure; as shown in FIG. 5B, in the decoder mode, the instruction stream (i.e., instructions 510 to 51m) is read in the instruction cache according to the instruction fetching request, and the last instruction 51m correspondingly has an instruction position indicated by a switch tag for performing decoder group switch (the instruction position indicated by switch tag 2 in the diagram); after the instruction stream is split and allocated to the decoder groups, instructions 510 to 51k are decoded by decoder group 0, instructions 51k+1 to 51m are decoded by decoder group 1, the last instruction 51m is decoded by decoder group 1 to obtain micro-op 52m' and 52m", micro-ops 52m" is attached with a switch tag, and the micro-op obtained as decoded by decoder group 1 is saved in the corresponding micro-op queue 1. After the decoding mode is switched to the micro-op cache mode, the instruction fetching address is searched in the micro-op cache and is hit, the micro-ops (i.e., micro-op 530 to micro-op 53m) are read; then micro-op 530 to micro-op 53m read are saved to the micro-op queue (i.e., micro-op queue 0) corresponding to the decoder group (i.e., decoder group 0) switched to as indicated by the switch tag corresponding to the last instruction 51m, before switching the decoding mode.

It may be understood that because the switch tag carried in the instruction fetching request at least indicates the instruction position for performing decoder group switch, and the micro-op cache mode does not undergo instruction decoding by the decoder group, the micro-op cache may not respond to the switch tag carried in the instruction fetching request, and the read micro-op is not attached with the switch tag.

In other embodiments, in the micro-op cache mode, when the instruction fetching request is not hit in the micro-op cache, it enters the decoder mode; the plurality of decoder groups in the decoder mode perform parallel decoding on the instructions corresponding to the instruction fetching request to obtain micro-ops, and the micro-ops obtained as decoded in the decoder mode may be saved in the micro-op cache. In the decoder mode switched to, after the instruction stream fetched by the instruction fetching request is split according to the instruction position indicated by the switch tag, the first instruction group among the obtained plurality of instruction groups is allocated to the instruction queue corresponding to the default decoder group; the instruction queue corresponding to the default decoder group may be an instruction queue corresponding to the first decoder group determined in order, or may also be an instruction queue corresponding to a decoder group specified by the processor, or may also be an instruction queue corresponding to the corresponding decoder group, determined according to whether the last instruction decoded by the decoder group has the instruction position indicated by the corresponding switch tag before entering the micro-op cache mode.

As an optional implementation, when the last instruction decoded by the decoder group does not have an instruction position indicated by a corresponding switch tag before the decoding mode of the processor is switched to the micro-op cache mode, after the micro-op cache mode is switched to the decoder mode, the first instruction group among the plurality of instruction groups obtained by splitting the instruction stream is allocated to an instruction queue corresponding to the decoder group decoding the last instruction, before switching to the micro-op cache mode. With further reference to FIG. 5A, before the decoding mode of the processor is switched to the micro-op cache mode, the last instruction 51m decoded by decoder group 1 does not have the instruction position indicated by the corresponding switch tag, so, when switching to the micro-op cache mode, in the case where the instruction fetching address in the instruction fetching request is not hit in the micro-op cache, then the decoding mode is switched to the decoder mode again, and after the instruction stream is split according to the instruction position indicated by the switch tag carried by the instruction fetching request (the position as shown by a dashed line in FIG. 5A), the obtained first instruction group (i.e., instruction 510 to instruction 51k) is allocated to instruction queue 1 corresponding to decoder group 1.

As another optional implementation, when the last instruction decoded by the decoder group has an instruction position indicated by a corresponding switch tag before the decoding mode of the processor is switched to the micro-op cache mode, after the micro-op cache mode is switched to the decoder mode, the first instruction group among the plurality of instruction groups obtained by splitting the instruction stream is allocated to the instruction queue corresponding to the decoder group switched to as indicated by the switch tag corresponding to the last instruction, before switching to the micro-op cache mode. With further reference to FIG. 5B, before the decoding mode of the processor is switched to the micro-op cache mode, the last instruction 51m decoded by decoder group 1 has the instruction position indicated by the corresponding switch tag, so, when switching to the micro-op cache mode, in the case where the instruction fetching address in the instruction fetching request is not hit in the micro-op cache, the decoding mode is switched to the decoder group mode again, and after the instruction stream is split according to the instruction position indicated by the switch tag carried by the instruction fetching request (the position as shown in switch tag 2 in FIG. 5B), the obtained first instruction group (i.e., instruction 510 to instruction 51k) is allocated to instruction queue 0 corresponding to decoder group 0 switched to as indicated by the switch tag corresponding to the last instruction 51m, before switching to the micro-op cache mode.

The embodiments of the present disclosure may allow in the processor having the micro-op cache and the decoder that, by carrying the switch tag in the instruction fetching request and at least indicating the instruction position for performing decoder group switch by the switch tag, in a decoder mode (corresponding to obtaining the micro-op through decoding by the decoder group), the switch tag may be transparently transmitted through the target instruction and the micro-op, to support parallel decoding by the plurality of decoder groups, thereby improving decoding efficiency; while in a micro-op cache mode of the processor (corresponding to obtaining the micro-op through searching by the micro-op cache), the embodiments of the present disclosure may allow processing not based on the switch tag carried in the instruction fetching request, so as to be compatible with the micro-op cache mode of the processor. The embodiments of the present disclosure may support parallel decoding in the processor that supports the decoder mode and the micro-op cache mode, so as to improve decoding performance. That is, the embodiments of the present disclosure may support parallel decoding in the decoder mode in the case where the processor is compatible with the micro-op cache mode, so as to improve decoding performance.

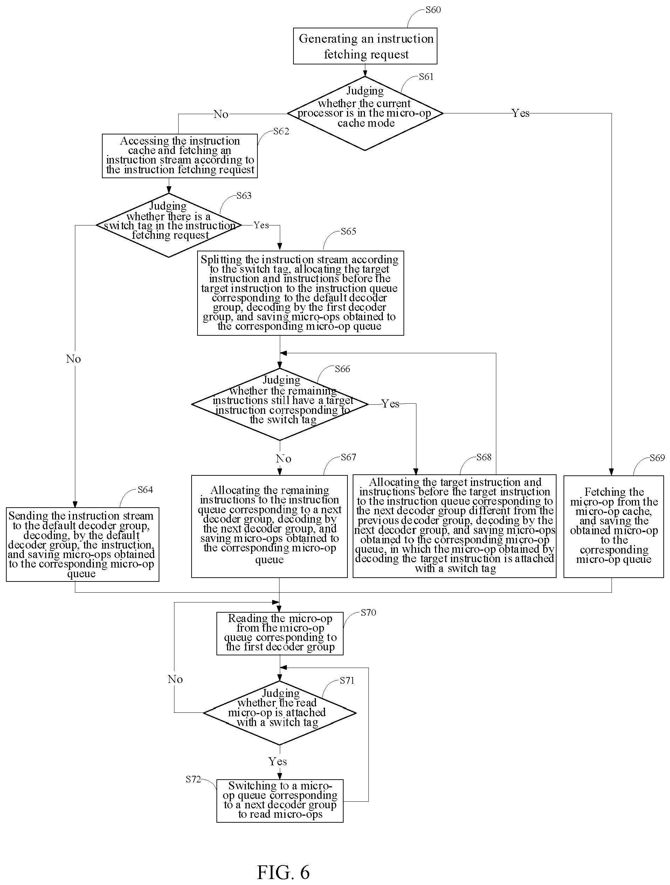

As an optional example, FIG. 6 shows another optional flowchart of the decoding method provided by at least one embodiment of the present disclosure; the method shown in FIG. 6 may be executed by the processor shown in FIG. 4B, and content described below and the content described above may be mutually referred to. Referring to FIG. 6, the method may include the following steps.

Step S60: generating an instruction fetching request.

Optionally, step S60 may be executed by the branch predicting unit; and the branch predicting unit may set a switch tag in the instruction fetching request according to a branch prediction jump result, for indicating the instruction position for performing decoder group switch.

Step S61: judging whether the current processor is in the micro-op cache mode; if NO, executing step S62; if YES, executing step S69.

The micro-op cache mode is obtaining micro-op through searching by the micro-op cache.

Step S62: accessing the instruction cache and fetching an instruction stream according to the instruction fetching request.

It should be noted that when the instruction cache reads the instruction stream according to the instruction fetching request, the switch tag carried by the instruction fetching request will be transparently transmitted outside the fetched instruction stream; because the switch tag at least indicates the instruction position for performing decoder group switch, the instruction position for performing the decoder group switch in the instruction stream may be determined, and further the target instruction corresponding to the instruction position is determined.

Step S63: judging whether there is a switch tag in the instruction fetching request; if NO, executing step S64; if YES, executing step S65.

Step S64: sending the instruction stream to the default decoder group, decoding, by the default decoder group, the instruction, and saving micro-ops obtained to the corresponding micro-op queue.

It may be understood that the switch tag carried by the instruction fetching request is at least used to indicate the instruction position for performing decoder group switch; when there is no switch tag in the instruction fetching request, there is no need to switch the decoder group; and the instruction stream is decoded by the default decoder group, and the micro-ops obtained are saved in the micro-op queue corresponding to the default decoder group. For example, the default decoder group may be the first decoder group allocated in order, or may also be a decoder group allocated as specified by the processor; in addition, during processing of instructions, for each instruction fetching request, the default decoder group may also be a decoder group currently switched to. The default decoder group according to the embodiments of the present disclosure is not specified as a certain fixed decoder group, and may be selected according to actual needs.

Step S65: splitting the instruction stream according to the switch tag, allocating the target instruction and instructions before the target instruction to the instruction queue corresponding to the default decoder group, decoding by the first decoder group, and saving micro-ops obtained to the corresponding micro-op queue, in which the target micro-op obtained by decoding the target instruction is attached with a switch tag.

Step S66: judging whether the remaining instructions still have a target instruction corresponding to the switch tag; if NO, executing step S67; if YES, executing step S68.

Step S67: allocating the remaining instructions to the instruction queue corresponding to a next decoder group different from the previous decoder group, decoding by the next decoder group, and saving micro-ops obtained to the corresponding micro-op queue.

Step S68: allocating the target instruction and instructions before the target instruction to the instruction queue corresponding to the next decoder group different from the previous decoder group, decoding by the next decoder group, and saving micro-ops obtained to the corresponding micro-op queue, in which the micro-op obtained by decoding the target instruction is attached with a switch tag; and returning to execute step S66.

It should be noted that because the instructions are allocated to the instruction queue of the decoder group, and then the instructions are read from the instruction queue by the decoder group for decoding, when the speed of allocating the instructions to the instruction queue is faster than the decoding speed of the decoder group, the embodiments of the present disclosure may implement allocating the split instruction stream to the instruction queue of the plurality of decoder groups, and cause the plurality of decoder groups to perform parallel decoding based on the instructions already allocated to the instruction queue. It should be further noted that step S65 to step S68 are only an optional implementation of splitting the instruction stream according to the switch tag corresponding to the target instruction, to obtain a plurality of instruction groups, and allocating the plurality of instruction groups to the plurality of decoder groups for parallel decoding according to the embodiments of the present disclosure.

Step S69: fetching the micro-op from the micro-op cache, and saving the obtained micro-op to the corresponding micro-op queue.

The selection of a micro-op queue is as described above, and no details will be repeated here.

It should be noted that the prerequisite for fetching a micro-op in the micro-op cache based on the instruction fetching request is that the instruction fetching request may be hit in the micro-op cache; when the instruction fetching request cannot be hit in the micro-op cache, it enters the decoder mode to execute step S62.

The decoder mode is obtaining a micro-op through decoding by the decoder group.

Step S70: reading the micro-op from the micro-op queue corresponding to the first decoder group.

Step S71: judging whether the read micro-op is attached with a switch tag; if YES, executing step S72; if NO, returning to execute step S70, until the micro-ops are read completely

Step S72: switching to a micro-op queue corresponding to a next decoder group to read micro-ops, and returning to step S71.

After the micro-ops are read completely, the micro-ops may be further executed according to the embodiments of the present disclosure.

The embodiments of the present disclosure may support parallel decoding in the processor that supports the decoder mode and the micro-op cache mode, so as to improve decoding performance. The examples/embodiments that are not covered by the claims in the present disclosure do not form part of the invention and are present for illustration purposes only.

The scope of the present disclosure should be the scope of the following claims.

## Claims

1. A decoding method, applied to a processor, the decoding method comprising:
generating an instruction fetching request by a branch predicting unit (101), wherein the instruction fetching request carries at least one switch tag, and the switch tag at least indicates an instruction position for performing decoder group switch (S21);
an instruction cache (102) acquiring an instruction stream fetched by the instruction fetching request in response to a micro-op being obtained as decoded by a decoder group, and determining the instruction position for performing decoder group switch in the instruction stream according to the switch tag carried by the instruction fetching request (S22); allocating the instruction stream to a plurality of decoder groups for parallel decoding according to the instruction position; attaching the switch tag to a target micro-op obtained by decoding a target instruction, wherein the target instruction is an instruction corresponding to the instruction position (S23); **characterised by**
acquiring a micro-op corresponding to the instruction fetching request from a micro-op cache, in response to a micro-op being obtained through searching by the micro-op cache, in a case where the instruction fetching request is hit in the micro-op cache,
wherein the processor comprises a plurality of decoding modes, and the plurality of decoding modes comprise a decoder mode and a micro-op cache mode, the decoder mode is obtaining a micro-op through decoding by a decoder group, and the micro-op cache mode is obtaining a micro-op through searching by the micro-op cache, and the decoding method further comprises:
in the micro-op cache mode, the branch predicting unit (101) sending the instruction fetching request carrying the at least one switch tag to the micro-op cache; and
in the micro-op cache mode, determining a micro-op queue corresponding to a decoder group, according to whether a last instruction decoded by a decoder group has an instruction position indicated by a corresponding switch tag before the decode mode is switched to the micro-op cache mode, to store an obtained micro-op.

2. The decoding method according to claim 1, wherein the instruction position is an end position of the target instruction; and determining the instruction position for performing decoder group switch in the instruction stream according to the switch tag carried by the instruction fetching request, comprises:
determining the end position of the target instruction in the instruction stream according to the instruction position indicated by the switch tag carried by the instruction fetching request.

3. The decoding method according to claim 1 or 2, wherein allocating the instruction stream to a plurality of decoder groups for parallel decoding according to the instruction position, comprises:
splitting the instruction stream according to the instruction position to obtain a plurality of instruction groups, and allocating the plurality of instruction groups to the plurality of decoder groups for parallel decoding.

4. The decoding method according to claim 3, wherein splitting the instruction stream according to the instruction position to obtain a plurality of instruction groups, comprises:
splitting the instruction stream into a plurality of instruction groups with the instruction position as a boundary in the instruction stream, wherein a target instruction that serves as a boundary in two adjacent instruction groups is grouped into a previous instruction group; and
allocating the plurality of instruction groups to the plurality of decoder groups for parallel decoding, comprises:
allocating a decoder group for a next instruction group according to a switch tag corresponding to the target instruction grouped into the previous instruction group, and a decoder group allocated for the previous instruction group being different from a decoder group allocated for the next instruction group.

5. The decoding method according to claim 4, wherein one decoder group is correspondingly provided with one instruction queue for saving instructions to be decoded; and allocating a decoder group for a next instruction group according to a switch tag corresponding to the target instruction grouped into the previous instruction group, and a decoder group allocated for the previous instruction group being different from a decoder group allocated for the next instruction group, comprises:
saving a first instruction group among the plurality of instruction groups to an instruction queue corresponding to a default decoder group; and
determining a decoder group from the plurality of decoder groups that is different from the decoder group allocated for the previous instruction group, for a non-first instruction group among the plurality of instruction groups, according to the switch tag corresponding to the target instruction in the previous instruction group, and saving the non-first instruction group to an instruction queue corresponding to the determined decoder group.

6. The decoding method according to claim 5, wherein determining a decoder group from the plurality of decoder groups that is different from the decoder group allocated for the previous instruction group, for a non-first instruction group among the plurality of instruction groups, according to the switch tag corresponding to the target instruction in the previous instruction group, comprises:
sequentially determining decoder groups allocated for respective non-first instruction groups from the plurality of decoder groups, in an order of the plurality of decoder groups, according to the switch tag corresponding to the target instruction in the previous instruction group of the non-first instruction group, for the non-first instruction group among the plurality of instruction groups.

7. The decoding method according to claim 5 or 6, wherein saving a first instruction group among the plurality of instruction groups to an instruction queue corresponding to a default decoder group, comprises:
allocating the first instruction group among the plurality of instruction groups to the instruction queue corresponding to the default decoder group, after exiting a micro-op cache mode and entering a decoder mode, wherein the decoder mode is obtaining a micro-op through decoding by a decoder group, and the micro-op cache mode is obtaining a micro-op through searching by the micro-op cache;
before a decoding mode is switched to the micro-op cache mode, in a case where a last instruction decoded by a decoder group does not have an instruction position indicated by a corresponding switch tag, then after the decoding mode continues to be switched to the decoder mode, the first instruction group is allocated to an instruction queue corresponding to a decoder group decoding the last instruction; and
before the decoding mode is switched to the micro-op cache mode, in a case where the last instruction decoded by a decoder group has an instruction position indicated by a corresponding switch tag, then after the decoding mode continues to be switched to the decoder mode, the first instruction group is allocated to an instruction queue corresponding to a decoder group indicated by the switch tag corresponding to the last instruction.

8. The decoding method according to any one of claims 1 to 6, wherein the decoding method further comprises:
merging micro-ops obtained as decoded by the plurality of decoder groups, in the decoder mode, according to the switch tag attached to the target micro-op, to obtain micro-ops corresponding to an instruction fetching order.

9. The decoding method according to claim 8, wherein one decoder group is correspondingly provided with one micro-op queue, and the decoding method further comprises:
saving micro-ops obtained as decoded by respective decoder groups into corresponding micro-op queues;
merging micro-ops obtained as decoded by the plurality of decoder groups, according to the switch tag attached to the target micro-op, to obtain micro-ops corresponding to an instruction fetching order, comprises:
merging the micro-ops in a switched manner between the micro-op queues corresponding to the respective decoder groups, according to the switch tag attached to the target micro-op, to obtain the micro-ops corresponding to the instruction fetching order;
merging the micro-ops in a switched manner between the micro-op queues corresponding to the respective decoder groups, according to the switch tag attached to the target micro-op, to obtain the micro-ops corresponding to the instruction fetching order, comprises:
starting reading micro-ops from a micro-op queue corresponding to a default decoder group; and in a case where a read micro-op is attached with a switch tag, determining a next micro-op queue to be switched to for micro-op reading, according to the switch tag attached to the micro-op, until the micro-ops in the corresponding micro-op queues of the respective decoder groups are read completely; and
in a case where the read micro-op is attached with the switch tag, determining a next micro-op queue to be switched to for micro-op reading, according to the switch tag attached to the micro-op, comprises:
in the case where the read micro-op is attached with the switch tag, sequentially switching micro-op queues for micro-op reading, from the micro-op queues of the respective decoder groups in an order of the micro-op queues, according to the switch tag attached to the micro-op.

10. A processor, comprising:
a branch predicting unit (101), configured to generate an instruction fetching request, wherein the instruction fetching request carries at least one switch tag, and the switch tag at least indicates an instruction position for performing decoder group switch;
an instruction cache (102), configured to acquire an instruction stream fetched by the instruction fetching request in response to a micro-op being obtained as decoded by a decoder group, and determine the instruction position for performing decoder group switch in the instruction stream according to the switch tag carried by the instruction fetching request;
an instruction allocating unit (201), configured to allocate the instruction stream to a plurality of decoder groups for parallel decoding according to the instruction position;
a decoder group, configured to decode allocated instructions to obtain micro-ops, wherein a total number of the decoder group is plural, and when the decoder group decodes a target instruction, a switch tag is attached to a target micro-op obtained by decoding the target instruction, and the target instruction is an instruction corresponding to the instruction position; **characterised by**
a micro-op cache (104), configured to acquire a micro-op corresponding to the instruction fetching request from the micro-op cache (104), in response to a micro-op being obtained through searching by the micro-op cache (104), in a case where the instruction fetching request is hit in the micro-op cache (104), wherein the micro-op acquired is not attached with the switch tag,
wherein the processor comprises a plurality of decoding modes, and the plurality of decoding modes comprise a decoder mode and a micro-op cache mode, the decoder mode is obtaining a micro-op through decoding by a decoder group, and the micro-op cache mode is obtaining a micro-op through searching by the micro-op cache,
in the micro-op cache mode, the branch predicting unit (101) sends the instruction fetching request carrying the at least one switch tag to the micro-op cache; and
in the micro-op cache mode, a micro-op queue corresponding to a decoder group is determined, according to whether a last instruction decoded by a decoder group has an instruction position indicated by a corresponding switch tag before the decode mode is switched to the micro-op cache mode, to store an obtained micro-op.

11. The processor according to claim 10, wherein the instruction position is an end position of the target instruction; and determining, by the instruction cache (102), the instruction position for performing decoder group switch in the instruction stream according to the switch tag carried by the instruction fetching request, comprises:
determining the end position of the target instruction in the instruction stream according to the instruction position indicated by the switch tag carried by the instruction fetching request.

12. The processor according to claim 10 or 11, wherein allocating, by the instruction allocating unit (201), the instruction stream to a plurality of decoder groups for parallel decoding according to the instruction position, comprises:
splitting, by the instruction allocating unit (201), the instruction stream according to the instruction position to obtain a plurality of instruction groups, and allocating the plurality of instruction groups to the plurality of decoder groups for parallel decoding;
splitting, by the instruction allocating unit (201), the instruction stream according to the instruction position to obtain a plurality of instruction groups, comprises:
splitting, by the instruction allocating unit (201), the instruction stream into a plurality of instruction groups with the instruction position as a boundary in the instruction stream, wherein a target instruction that serves as a boundary in two adjacent instruction groups is grouped into a previous instruction group; and
allocating, by the instruction allocating unit (201), a decoder group for a next instruction group according to a switch tag corresponding to the target instruction grouped into the previous instruction group, and a decoder group allocated for the previous instruction group being different from a decoder group allocated for the next instruction group;
one decoder group is correspondingly provided with one instruction queue for saving instructions to be decoded; and
allocating, by the instruction allocating unit (201), a decoder group for a next instruction group according to a switch tag corresponding to the target instruction grouped into the previous instruction group, and a decoder group allocated for the previous instruction group being different from a decoder group allocated for the next instruction group, comprises:
saving, by the instruction allocating unit (201), a first instruction group among the plurality of instruction groups to an instruction queue corresponding to a default decoder group; and
determining, by the instruction allocating unit (201), a decoder group from the plurality of decoder groups that is different from the decoder group allocated for the previous instruction group, for a non-first instruction group among the plurality of instruction groups, according to the switch tag corresponding to the target instruction in the previous instruction group, and saving the non-first instruction group to an instruction queue corresponding to the determined decoder group.

13. The processor according to any one of claims 10 to 12, further comprising:
a merging unit, configured to merge micro-ops obtained as decoded by the plurality of decoder groups, in a decoder mode, according to the switch tag attached to the target micro-op, to obtain micro-ops corresponding to an instruction fetching order, wherein the decoder mode is obtaining a micro-op through decoding by a decoder group;
one decoder group is correspondingly provided with one micro-op queue; the decoder group is further configured to save decoded micro-ops into corresponding micro-op queues;
merging, by the merging unit, micro-ops obtained as decoded by the plurality of decoder groups, according to the switch tag attached to the target micro-op, to obtain micro-ops corresponding to an instruction fetching order, comprises:
merging the micro-ops in a switched manner between the micro-op queues corresponding to respective decoder groups, according to the switch tag attached to the target micro-op, to obtain the micro-ops corresponding to the instruction fetching order;
the micro-op cache (104) is further configured to save an obtained micro-op to a micro-op queue corresponding to a default decoder group, in a micro-op cache mode, wherein the micro-op cache mode is obtaining a micro-op through searching by the micro-op cache (104);
the decoder group is further configured to save the decoded micro-ops into the micro-op cache (104); and
in a case where the instruction fetching request is not hit in the micro-op cache (104) in the micro-op cache mode, the decoder mode is entered.

14. A chip, comprising the processor according to any one of claims 10 to 13.

15. An electronic device, comprising the chip according to claim 14.

## Patentansprüche

1. Ein Dekodierungsverfahren, das auf einen Prozessor angewendet wird, das Dekodierungsverfahren umfassend:
Erzeugen einer Befehlsabrufanforderung durch eine Verzweigungsvorhersageeinheit (101), wobei die Befehlsabrufanforderung mindestens ein Umschaltkennzeichen trägt, und das Umschaltkennzeichen mindestens eine Befehlsposition zum Durchführen einer Dekodiergruppenumschaltung angibt (S21);
Erfassen eines Befehlsstroms, durch einen Befehlscache (102), der durch die Befehlsabrufanforderung abgerufen wurde, als Reaktion auf einen wie von einer Dekodiergruppe dekodiert erhaltenen Mikrobefehl, und Bestimmen der Befehlsposition zum Durchführen einer Dekodiergruppenumschaltung in dem Befehlsstrom gemäß dem von der Befehlsabrufanforderung getragenen Umschaltkennzeichen (S22); Zuweisen des Befehlsstroms zu einer Vielzahl von Dekodiergruppen zum parallelen Dekodieren gemäß der Befehlsposition; Anhängen des Umschaltkennzeichens an einen durch Dekodieren eines Zielbefehls erhaltenen Ziel-Mikrobefehl, wobei der Zielbefehl ein Befehl ist, der der Befehlsposition entspricht (S23); **gekennzeichnet durch**
Erfassen eines Mikrobefehls, der der Befehlsabrufanforderung entspricht, aus einem Mikrobefehl-Cache, als Reaktion darauf, dass ein Mikrobefehl durch Suchen in dem Mikrobefehl-Cache erhalten wurde, in einem Fall, in dem die Befehlsabrufanforderung in dem Mikrobefehl-Cache getroffen wurde,
wobei der Prozessor eine Vielzahl von Dekodierungsmodi umfasst, und die Vielzahl von Dekodierungsmodi einen Dekodiermodus und einen Mikrobefehl-Cache-Modus umfassen, wobei der Dekodiermodus einen Mikrobefehl durch Dekodierung durch eine Dekodiergruppe erhält, und der Mikrobefehl-Cache-Modus einen Mikrobefehl durch Suchen in dem Mikrobefehl-Cache erhält, und das Dekodierungsverfahren ferner umfasst:
in dem Mikrobefehl-Cache-Modus, Senden, durch die Verzweigungsvorhersageeinheit (101), der Befehlsabrufanforderung, die das mindestens eine Umschaltkennzeichen trägt, an den Mikrobefehl-Cache; und
in dem Mikrobefehl-Cache-Modus, Bestimmen von einer einer Dekodiergruppe entsprechende Mikrobefehl-Warteschlange, je nachdem, ob ein letzter von einer Dekodiergruppe dekodierter Befehl eine Befehlsposition aufweist, die durch ein entsprechendes Umschaltkennzeichen angegeben ist, bevor der Dekodiermodus in den Mikrobefehl-Cache-Modus umgeschaltet wird, um einen erhaltenen Mikrobefehl zu speichern.

2. Das Dekodierungsverfahren nach Anspruch 1, wobei die Befehlsposition eine Endposition des Zielbefehls ist; und das Bestimmen der Befehlsposition zum Durchführen einer Dekodiergruppenumschaltung in dem Befehlsstrom gemäß dem von der Befehlsabrufanforderung getragenen Umschaltkennzeichen umfasst:
Bestimmen der Endposition des Zielbefehls in dem Befehlsstrom gemäß der Befehlsposition, die durch das von der Befehlsabrufanforderung getragene Umschaltkennzeichen angegeben ist.

3. Das Dekodierungsverfahren nach Anspruch 1 oder 2, wobei das Zuweisen des Befehlsstroms zu einer Vielzahl von Dekodiergruppen zur parallelen Dekodierung gemäß der Befehlsposition umfasst:
Aufteilen des Befehlsstroms gemäß der Befehlsposition, um eine Vielzahl von Befehlsgruppen zu erhalten, und Zuweisen der Vielzahl von Befehlsgruppen zu der Vielzahl von Dekodiergruppen zur parallelen Dekodierung.

4. Das Dekodierungsverfahren nach Anspruch 3, wobei das Aufteilen des Befehlsstroms gemäß der Befehlsposition, um eine Vielzahl von Befehlsgruppen zu erhalten, umfasst:
Aufteilen des Befehlsstroms in eine Vielzahl von Befehlsgruppen mit der Befehlsposition als Grenze in dem Befehlsstrom, wobei ein Zielbefehl, der als Grenze in zwei benachbarten Befehlsgruppen dient, in eine vorherige Befehlsgruppe eingruppiert wird; und
das Zuweisen der Vielzahl von Befehlsgruppen zu der Vielzahl von Dekodiergruppen zur parallelen Dekodierung umfasst:
Zuweisen einer Dekodiergruppe für eine nächste Befehlsgruppe gemäß einem Umschaltkennzeichen, das dem in die vorherige Befehlsgruppe eingruppierten Zielbefehl entspricht, wobei sich eine der vorherigen Befehlsgruppe zugewiesene Dekodiergruppe von einer der nächsten Befehlsgruppe zugewiesenen Dekodiergruppe unterscheidet.

5. Das Dekodierungsverfahren nach Anspruch 4, wobei eine Dekodiergruppe entsprechend mit einer Befehlswarteschlange zum Speichern von zu dekodierenden Befehlen versehen ist; und das Zuweisen einer Dekodiergruppe für eine nächste Befehlsgruppe gemäß einem Umschaltkennzeichen, das dem in die vorherige Befehlsgruppe eingruppierten Zielbefehl entspricht, wobei sich eine der vorherigen Befehlsgruppe zugewiesene Dekodiergruppe von einer der nächsten Befehlsgruppe zugewiesenen Dekodiergruppe unterscheidet, umfasst:
Speichern einer ersten Befehlsgruppe aus der Vielzahl von Befehlsgruppen in einer Befehlswarteschlange, die einer Standard-Dekodiergruppe entspricht; und
Bestimmen einer Dekodiergruppe aus der Vielzahl von Dekodiergruppen, die sich von der der vorherigen Befehlsgruppe zugewiesenen Dekodiergruppe unterscheidet, für eine nicht-erste Befehlsgruppe aus der Vielzahl von Befehlsgruppen gemäß dem Umschaltkennzeichen, das dem Zielbefehl in der vorherigen Befehlsgruppe entspricht, und Speichern der nicht-ersten Befehlsgruppe in einer Befehlswarteschlange, die der bestimmten Dekodiergruppe entspricht.

6. Das Dekodierungsverfahren nach Anspruch 5, wobei das Bestimmen einer Dekodiergruppe aus der Vielzahl von Dekodiergruppen, die sich von der der vorherigen Befehlsgruppe zugewiesenen Dekodiergruppe unterscheidet, für eine nicht-erste Befehlsgruppe unter der Vielzahl von Befehlsgruppen gemäß dem Umschaltkennzeichen, das dem Zielbefehl in der vorherigen Befehlsgruppe entspricht, umfasst:
sequenzielle Bestimmen von Dekodiergruppen, die den jeweiligen nicht-ersten Befehlsgruppen zugewiesen sind, aus der Vielzahl von Dekodiergruppen, in einer Reihenfolge der Vielzahl von Dekodiergruppen gemäß dem Umschaltkennzeichen, das dem Zielbefehl in der vorherigen Befehlsgruppe der nicht-ersten Befehlsgruppe entspricht, für die nicht-erste Befehlsgruppe unter der Vielzahl von Befehlsgruppen.

7. Das Dekodierungsverfahren nach Anspruch 5 oder 6, wobei das Speichern einer ersten Befehlsgruppe aus der Vielzahl von Befehlsgruppen in einer Befehlswarteschlange, die einer Standard-Dekodiergruppe entspricht, umfasst:
Zuweisen der ersten Befehlsgruppe aus der Vielzahl von Befehlsgruppen zu der Befehlswarteschlange, die der Standard-Dekodiergruppe entspricht, nach dem Verlassen eines Mikrobefehl-Cache-Modus und dem Eintreten in einen Dekodiermodus, wobei der Dekodiermodus einen Mikrobefehl durch Dekodieren durch eine Dekodiergruppe erhält, und der Mikrobefehl-Cache-Modus einen Mikrobefehl durch Suchen in dem Mikrobefehl-Cache erhält;
bevor ein Dekodierungsmodus in den Mikrobefehl-Cache-Modus umgeschaltet wird, in einem Fall, in dem ein letzter durch eine Dekodiergruppe dekodierter Befehl keine Befehlsposition aufweist, die durch ein entsprechendes Umschaltkennzeichen angegeben ist, nachdem weiterhin der Dekodierungsmodus in den Dekodiermodus umgeschaltet wird, wird die erste Befehlsgruppe einer Befehlswarteschlange zugewiesen, die einer den letzten Befehl dekodierenden Dekodiergruppe entspricht; und
bevor der Dekodierungsmodus in den Mikrobefehl-Cache-Modus umgeschaltet wird, in einem Fall, in dem der letzte durch eine Dekodiergruppe dekodierte Befehl eine Befehlsposition aufweist, die durch ein entsprechendes Umschaltkennzeichen angegeben ist, nachdem weiterhin der Dekodierungsmodus in den Dekodiermodus umgeschaltet wird, wird die erste Befehlsgruppe einer Befehlswarteschlange zugewiesen, die einer Dekodiergruppe entspricht, die durch das dem letzten Befehl entsprechende Umschaltkennzeichen angegeben ist.

8. Das Dekodierungsverfahren nach einem der Ansprüche 1 bis 6, wobei das Dekodierungsverfahren ferner umfasst:
Zusammenführen von Mikrobefehlen, die wie von der Vielzahl von Dekodiergruppen dekodiert erhalten wurden, in dem Dekodiermodus, gemäß dem an den Ziel-Mikrobefehl angehängten Umschaltkennzeichen, um Mikrobefehle zu erhalten, die einer Befehlsabrufreihenfolge entsprechen.

9. Das Dekodierungsverfahren nach Anspruch 8, wobei eine Dekodiergruppe entsprechend mit einer Mikrobefehl-Warteschlange versehen ist, und das Dekodierungsverfahren ferner umfasst:
Speichern der wie von jeweiligen Dekodiergruppen dekodiert erhaltenen Mikrobefehle in entsprechenden Mikrobefehl-Warteschlangen;
das Zusammenführen von Mikrobefehlen, die wie von der Vielzahl von Dekodiergruppen dekodiert erhalten wurden, gemäß dem an den Ziel-Mikrobefehl angehängten Umschaltkennzeichen, um Mikrobefehle zu erhalten, die einer Befehlsabrufreihenfolge entsprechen, umfasst:
Zusammenführen der Mikrobefehle in einer geschalteten Weise zwischen den Mikrobefehl-Warteschlangen, die den jeweiligen Dekodiergruppen entsprechen, gemäß dem an den Ziel-Mikrobefehl angehängten Umschaltkennzeichen, um Mikrobefehle zu erhalten, die der Befehlsabrufreihenfolge entsprechen;
das Zusammenführen der Mikrobefehle in einer geschalteten Weise zwischen den Mikrobefehl-Warteschlangen, die den jeweiligen Dekodiergruppen entsprechen, gemäß dem an den Ziel-Mikrobefehl angehängten Umschaltkennzeichen, um Mikrobefehle zu erhalten, die der Befehlsabrufreihenfolge entsprechen, umfasst:
Beginnen des Lesens von Mikrobefehlen aus einer Mikrobefehl-Warteschlange, die einer Standard-Dekodiergruppe entspricht; und in einem Fall, in dem an einen gelesenen Mikrobefehl ein Umschaltkennzeichen angehängt ist, Bestimmen einer nächsten Mikrobefehl-Warteschlange, zu der für das Lesen von Mikrobefehlen geschaltet werden soll, gemäß dem an den Mikrobefehl angehängten Umschaltkennzeichen, bis die Mikrobefehle in den entsprechenden Mikrobefehl-Warteschlangen der jeweiligen Dekodiergruppen vollständig gelesen sind; und
in einem Fall, in dem an den gelesenen Mikrobefehl ein Umschaltkennzeichen angehängt ist, Bestimmen einer nächsten Mikrobefehl-Warteschlange, zu der für das Lesen von Mikrobefehlen geschaltet werden soll, gemäß dem an den Mikrobefehl angehängten Umschaltkennzeichen, umfasst:
in dem Fall, dass an den gelesenen Mikrobefehl das Umschaltkennzeichen angehängt ist, sequentielles Umschalten von Mikrobefehl-Warteschlangen für das Lesen von Mikrobefehlen, aus den Mikrobefehl-Warteschlangen der jeweiligen Dekodiergruppen in einer Reihenfolge der Mikrobefehl-Warteschlangen, gemäß dem an den Mikrobefehl angehängten Umschaltkennzeichen.

10. Ein Prozessor, umfassend:
eine Verzweigungsvorhersageeinheit (101), die konfiguriert ist, eine Befehlsabrufanforderung zu erzeugen, wobei die Befehlsabrufanforderung mindestens ein Umschaltkennzeichen trägt, und das Umschaltkennzeichen mindestens eine Befehlsposition zum Durchführen einer Dekodiergruppenumschaltung angibt;
einen Befehlscache (102), der konfiguriert ist, einen Befehlsstrom zu erfassen, der durch die Befehlsabrufanforderung abgerufen wurde, als Reaktion auf einen wie von eine Dekodiergruppe dekodiert erhaltenen Mikrobefehl, und die Befehlsposition zum Durchführen einer Dekodiergruppenumschaltung in dem Befehlsstrom gemäß dem von der Befehlsabrufanforderung getragenen Umschaltkennzeichen zu bestimmen;
eine Befehlszuweisungseinheit (201), die konfiguriert ist, den Befehlsstrom einer Vielzahl von Dekodiergruppen zur parallelen Dekodierung gemäß der Befehlsposition zuzuweisen;
eine Dekodiergruppe, die konfiguriert ist, zugewiesene Befehle zu dekodieren, um Mikrobefehle zu erhalten, wobei eine Gesamtzahl der Dekodiergruppen mehrere beträgt, und wenn die Dekodiergruppe einen Zielbefehl dekodiert, ein Umschaltkennzeichen an einen durch Dekodieren des Zielbefehls erhaltenen Ziel-Mikrobefehl angehängt wird, und der Zielbefehl ein Befehl ist, der der Befehlsposition entspricht; **gekennzeichnet durch**
einen Mikrobefehl-Cache (104), der konfiguriert ist, einen Mikrobefehl, der der Befehlsabrufanforderung entspricht, aus dem Mikrobefehl-Cache (104) zu erfassen, als Reaktion darauf, dass ein Mikrobefehl durch Suchen in dem Mikrobefehl-Cache erhalten wurde, in einem Fall, in dem die Befehlsabrufanforderung in dem Mikrobefehl-Cache (104) getroffen wurde, wobei an den erfassten Mikrobefehl nicht das Umschaltkennzeichen angehängt ist, wobei der Prozessor eine Vielzahl von Dekodierungsmodi umfasst, und die Vielzahl von Dekodierungsmodi einen Dekodiermodus und einen Mikrobefehl-Cache-Modus umfassen, wobei der Dekodiermodus einen Mikrobefehl durch Dekodierung durch eine Dekodiergruppe erhält, und der Mikrobefehl-Cache-Modus einen Mikrobefehl durch Suchen in dem Mikrobefehl-Cache erhält,
in dem Mikrobefehl-Cache-Modus, die Verzweigungsvorhersageeinheit (101) die Befehlsabrufanforderung, die das mindestens eine Umschaltkennzeichen trägt, an den Mikrobefehl-Cache sendet; und
in dem Mikrobefehl-Cache-Modus, eine einer Dekodiergruppe entsprechende Mikrobefehl-Warteschlange bestimmt wird, je nachdem, ob ein letzter von einer Dekodiergruppe dekodierter Befehl eine Befehlsposition aufweist, die durch ein entsprechendes Umschaltkennzeichen angegeben ist, bevor der Dekodiermodus in den Mikrobefehl-Cache-Modus umgeschaltet wird, um einen erhaltenen Mikrobefehl zu speichern.

11. Der Prozessor nach Anspruch 10, wobei die Befehlsposition eine Endposition des Zielbefehls ist; und das Bestimmen, durch den Befehlscache (102), der Befehlsposition zum Durchführen einer Dekodiergruppenumschaltung in dem Befehlsstrom gemäß dem von der Befehlsabrufanforderung getragenen Umschaltkennzeichen umfasst:
Bestimmen der Endposition des Zielbefehls in dem Befehlsstrom gemäß der Befehlsposition, die durch das von der Befehlsabrufanforderung getragene Umschaltkennzeichen angegeben ist.

12. Der Prozessor nach Anspruch 10 oder 11, wobei das Zuweisen, durch die Befehlszuweisungseinheit (201), des Befehlsstroms zu einer Vielzahl von Dekodiergruppen zur parallelen Dekodierung gemäß der Befehlsposition umfasst:
Aufteilen, durch die Befehlszuweisungseinheit (201), des Befehlsstroms gemäß der Befehlsposition, um eine Vielzahl von Befehlsgruppen zu erhalten, und Zuweisen der Vielzahl von Befehlsgruppen zu der Vielzahl von Dekodiergruppen zur parallelen Dekodierung;
das Aufteilen, durch die Befehlszuweisungseinheit (201), des Befehlsstroms gemäß der Befehlsposition, um eine Vielzahl von Befehlsgruppen zu erhalten, umfasst:
Aufteilen, durch die Befehlszuweisungseinheit (201), des Befehlsstroms in eine Vielzahl von Befehlsgruppen mit der Befehlsposition als Grenze in dem Befehlsstrom, wobei ein Zielbefehl, der als Grenze in zwei benachbarten Befehlsgruppen dient, in eine vorherige Befehlsgruppe eingruppiert wird; und
Zuweisen, durch die Befehlszuweisungseinheit (201), einer Dekodiergruppe für eine nächste Befehlsgruppe gemäß einem dem in die vorherige Befehlsgruppe eingruppierten Zielbefehl entsprechenden Umschaltzeichen, wobei sich eine für die vorherige Befehlsgruppe zugewiesene Dekodiergruppe von einer für die nächste Befehlsgruppe zugewiesenen Dekodiergruppe unterscheidet;
eine Dekodiergruppe entsprechend mit einer Befehlswarteschlange zum Speichern von zu dekodierenden Befehlen versehen ist; und
das Zuweisen, durch die Befehlszuweisungseinheit (201), einer Dekodiergruppe für eine nächste Befehlsgruppe gemäß einem dem in die vorherige Befehlsgruppe eingruppierten Zielbefehl entsprechenden Umschaltzeichen, wobei sich eine für die vorherige Befehlsgruppe zugewiesene Dekodiergruppe von einer für die nächste Befehlsgruppe zugewiesenen Dekodiergruppe unterscheidet, umfasst:
Speichern, durch die Befehlszuweisungseinheit (201), einer ersten Befehlsgruppe aus der Vielzahl von Befehlsgruppen in einer Befehlswarteschlange, die einer Standard-Dekodiergruppe entspricht; und
Bestimmen, durch die Befehlszuweisungseinheit (201), einer Dekodiergruppe aus der Vielzahl von Dekodiergruppen, die sich von der der vorherigen Befehlsgruppe zugewiesenen Dekodiergruppe unterscheidet, für eine nicht-erste Befehlsgruppe aus der Vielzahl von Befehlsgruppen gemäß dem dem Zielbefehl in der vorherigen Befehlsgruppe entsprechenden Umschaltkennzeichen, und Speichern der nicht-ersten Befehlsgruppe in einer der bestimmten Dekodiergruppe entsprechenden Befehlswarteschlange.

13. Der Prozessor nach einem der Ansprüche 10 bis 12, ferner umfassend:
eine Zusammenführungseinheit, die konfiguriert ist, Mikrobefehle, die wie von der Vielzahl von Dekodiergruppen dekodiert erhalten wurden, in einem Dekodiermodus, gemäß dem an den Ziel-Mikrobefehl angehängten Umschaltkennzeichen, um Mikrobefehle zu erhalten, die einer Befehlsabrufreihenfolge entsprechen, wobei der Dekodiermodus eine Mikrobefehl durch Dekodierung durch eine Dekodiergruppe erhält;
eine Dekodiergruppe entsprechend mit einer Mikrobefehls-Warteschlange versehen ist; die Dekodiergruppe ferner konfiguriert ist, dekodierte Mikrobefehle in entsprechende Mikrobefehl-Warteschlangen zu speichern;
das Zusammenführen, durch die Zusammenführungseinheit, von Mikrobefehlen, die wie von der Vielzahl von Dekodiergruppen dekodiert erhalten wurden, gemäß dem an den Ziel-Mikrobefehl angehängten Umschaltkennzeichen, um Mikrobefehle zu erhalten, die einer Befehlsabrufreihenfolge entsprechen, umfasst:
Zusammenführen der Mikrobefehle in einer geschalteten Weise zwischen den Mikrobefehl-Warteschlangen, die den jeweiligen Dekodiergruppen entsprechen, gemäß dem an den Ziel-Mikrobefehl angehängten Umschaltkennzeichen, um Mikrobefehle zu erhalten, die der Befehlsabrufreihenfolge entsprechen,
der Mikrobefehls-Cache (104) ferner konfiguriert ist, einen erhaltenen Mikrobefehl in einer einer Standard-Dekodiergruppe entsprechenden Mikrobefehls-Warteschlange zu speichern, in einem Mikrobefehl-Cache-Modus, wobei der Mikrobefehl-Cache-Modus eine Mikrobefehl durch Suchen in dem Mikrobefehls-Cache (104) erhält;
die Dekodiergruppe ferner konfiguriert ist, die dekodierten Mikrobefehle in dem Mikrobefehls-Cache (104) zu speichern; und
in einem Fall, in dem die Befehlsabrufanforderung in dem Mikrobefehl-Cache-Modus nicht im Mikrobefehls-Cache (104) gefunden wird, in den Dekodiermodus eingetreten wird.

14. Ein Chip, umfassend den Prozessor nach einem der Ansprüche 10 bis 13.

15. Eine elektronische Vorrichtung, umfassend den Chip nach Anspruch 14.

## Revendications

1. Procédé de décodage, appliqué à un processeur, le procédé de décodage comprenant :
la génération d'une demande de récupération d'instruction par une unité de prédiction de branche (101), dans lequel la demande de récupération d'instruction porte au moins une étiquette de commutation, et l'étiquette de commutation indique au moins une position d'instruction pour réaliser une commutation de groupe de décodeurs (S21) ;
l'acquisition, par une mémoire cache d'instructions (102), d'un flux d'instructions récupéré par la demande de récupération d'instruction en réponse à une micro-opération qui est obtenue sous forme décodée par un groupe de décodeurs, et la détermination de la position d'instruction pour réaliser une commutation de groupe de décodeurs dans le flux d'instructions selon l'étiquette de commutation portée par la demande de récupération d'instruction (S22) ; l'attribution du flux d'instructions à une pluralité de groupes de décodeurs pour un décodage parallèle selon la position d'instruction ; la fixation de l'étiquette de commutation à une micro-opération cible obtenue par décodage d'une instruction cible, dans lequel l'instruction cible est une instruction correspondant à la position d'instruction (S23) ; **caractérisé par**
l'acquisition d'une micro-opération correspondant à la demande de récupération d'instructions auprès d'une mémoire cache de micro-opérations, en réponse à une micro-opération obtenue par recherche par la mémoire cache de micro-opérations, dans un cas où la demande de récupération d'instruction est atteinte dans la mémoire cache de micro-opérations,
dans lequel le processeur comprend une pluralité de modes de décodage, et la pluralité de modes de décodage comprennent un mode décodeurs et un mode mémoire cache de micro-opérations, le mode décodeurs obtient une micro-opération par décodage par un groupe de décodeurs, et le mode mémoire cache de micro-opérations obtient une micro-opération par recherche par la mémoire cache de micro-opérations, et le procédé de décodage comprend en outre :
dans le mode mémoire cache de micro-opérations, l'envoi, par l'unité de prédiction de branche (101), de la demande de récupération d'instruction portant ladite au moins une étiquette de commutation à la mémoire cache de micro-opérations ; et
dans le mode mémoire cache de micro-opérations, la détermination d'une file d'attente de micro-opérations correspondant à un groupe de décodeurs, selon qu'une dernière instruction décodée par un groupe de décodeurs présente une position d'instruction indiquée par une étiquette de commutation correspondante avant la commutation du mode de décodage en mode mémoire cache de micro-opérations, pour stocker une micro-opération obtenue.

2. Procédé de décodage selon la revendication 1, dans lequel la position d'instruction est une position finale de l'instruction cible ; et la détermination de la position d'instruction pour réaliser une commutation de groupe de décodeurs dans le flux d'instructions selon l'étiquette de commutation portée par la demande de récupération d'instruction, comprend :
la détermination de la position finale de l'instruction cible dans le flux d'instructions en fonction de la position d'instruction indiquée par l'étiquette de commutation portée par la demande de récupération d'instruction.

3. Procédé de décodage selon la revendication 1 ou 2, dans lequel l'attribution du flux d'instructions à une pluralité de groupes de décodeurs pour un décodage parallèle selon la position d'instruction, comprend :
la division du flux d'instructions selon la position d'instruction pour obtenir une pluralité de groupes d'instructions, et l'attribution de la pluralité de groupes d'instructions à la pluralité de groupes de décodeurs pour un décodage parallèle.

4. Procédé de décodage selon la revendication 3, dans lequel la division du flux d'instructions selon la position d'instruction pour obtenir une pluralité de groupes d'instructions, comprend :
la division du flux d'instructions en une pluralité de groupes d'instructions avec la position d'instruction comme frontière dans le flux d'instructions, dans lequel une instruction cible qui sert de frontière dans deux groupes d'instructions adjacents est regroupée dans un groupe d'instructions précédent ; et
l'attribution de la pluralité de groupes d'instructions à la pluralité de groupes de décodeurs pour un décodage parallèle, comprend :
l'attribution d'un groupe de décodeurs pour un groupe d'instructions suivant selon une étiquette de commutation correspondant à l'instruction cible regroupée dans le groupe d'instructions précédent, et un groupe de décodeurs attribué pour le groupe d'instructions précédent étant différent d'un groupe de décodeurs attribué pour le groupe d'instructions suivant.

5. Procédé de décodage selon la revendication 4, dans lequel un groupe de décodeurs est doté de même d'une file d'attente d'instructions pour sauvegarder des instructions à décoder ; et l'attribution d'un groupe de décodeurs pour un groupe d'instructions suivant selon une étiquette de commutation correspondant à l'instruction cible regroupée dans le groupe d'instructions précédent, et un groupe de décodeurs attribué pour le groupe d'instructions précédent étant différent d'un groupe de décodeurs attribué pour le groupe d'instructions suivant, comprend :
la sauvegarde d'un premier groupe d'instructions parmi la pluralité de groupes d'instructions dans une file d'attente d'instructions correspondant à un groupe de décodeurs par défaut ; et
la détermination d'un groupe de décodeurs parmi la pluralité de groupes de décodeurs qui est différent du groupe de décodeurs attribué pour le groupe d'instructions précédent, pour un groupe d'instructions qui n'est pas le premier parmi la pluralité de groupes d'instructions, selon l'étiquette de commutation correspondant à l'instruction cible dans le groupe d'instructions précédent, et la sauvegarde du groupe d'instructions qui n'est pas le premier dans une file d'attente d'instructions correspondant au groupe de décodeurs déterminé.

6. Procédé de décodage selon la revendication 5, dans lequel la détermination d'un groupe de décodeurs parmi la pluralité de groupes de décodeurs qui est différent du groupe de décodeurs attribué pour le groupe d'instructions précédent, pour un groupe d'instructions qui n'est pas le premier parmi la pluralité de groupes d'instructions, selon l'étiquette de commutation correspondant à l'instruction cible dans le groupe d'instructions précédent, comprend :
la détermination séquentielle de groupes de décodeurs attribués pour des groupes respectifs d'instructions qui ne sont pas le premier parmi la pluralité de groupes de décodeurs, dans un ordre de la pluralité de groupes de décodeurs, selon l'étiquette de commutation correspondant à l'instruction cible dans le groupe d'instructions précédent du groupe d'instructions qui n'est pas le premier, pour le groupe d'instructions qui n'est pas le premier parmi la pluralité de groupes d'instructions.

7. Procédé de décodage selon la revendication 5 ou 6, dans lequel la sauvegarde d'un premier groupe d'instructions parmi la pluralité de groupes d'instructions dans une file d'attente d'instructions correspondant à un groupe de décodeurs par défaut, comprend :
l'attribution du premier groupe d'instructions parmi la pluralité de groupes d'instructions à la file d'attente d'instructions correspondant au groupe de décodeurs par défaut, après avoir quitté un mode mémoire cache de micro-opérations et être entré dans un mode décodeurs, dans lequel le mode décodeurs obtient une micro-opération par décodage par un groupe de décodeurs, et le mode mémoire cache de micro-opérations obtient une micro-opération par recherche par la mémoire cache de micro-opérations ;
avant commutation d'un mode de décodage en mode mémoire cache de micro-opérations, dans un cas où une dernière instruction décodée par un groupe de décodeurs n'a pas de position d'instruction indiquée par une étiquette de commutation correspondante, puis après que le mode de décodage continue à commuter en mode décodeurs, le premier groupe d'instructions est attribué à une file d'attente d'instructions correspondant à un groupe de décodeurs décodant la dernière instruction ; et
avant commutation du mode de décodage en mode mémoire cache de micro-opérations, dans un cas où la dernière instruction décodée par un groupe de décodeurs a une position d'instruction indiquée par une étiquette de commutation correspondante, puis après que le mode de décodage continue à commuter en mode décodeurs, le premier groupe d'instruction est attribué à une file d'attente d'instructions correspondant à un groupe de décodeurs indiqué par l'étiquette de commutation correspondant à la dernière instruction.

8. Procédé de décodage selon l'une des revendications 1 à 6, dans lequel le procédé de décodage comprend en outre :
la fusion de micro-opérations obtenues sous forme décodées par la pluralité de groupes de décodeurs, en mode décodeurs, selon l'étiquette de commutation fixée à la micro-opération cible, pour obtenir des micro-opérations correspondant à un ordre de récupération d'instruction.

9. Procédé de décodage selon la revendication 8, dans lequel un groupe de décodeurs est doté de même d'une file d'attente de micro-opérations, et le procédé de décodage comprend en outre :
la sauvegarde de micro-opérations obtenues sous forme décodées par des groupes de décodeurs respectifs dans des files d'attente de micro-opérations correspondantes ;
la fusion de micro-opérations obtenues sous forme décodées par la pluralité de groupes de décodeurs, selon l'étiquette de commutation fixée à la micro-opération cible, pour obtenir des micro-opérations correspondant à un ordre de récupération d'instruction, comprend :
la fusion des micro-opérations d'une manière commutée entre les files d'attente de micro-opérations correspondant aux groupes de décodeurs respectifs, selon l'étiquette de commutation fixée à la micro-opération cible, pour obtenir les micro-opérations correspondant à l'ordre de récupération d'instruction ;
la fusion des micro-opérations d'une manière commutée entre les files d'attente de micro-opérations correspondant aux groupes de décodeurs respectifs, selon l'étiquette de commutation fixée à la micro-opération cible, pour obtenir les micro-opérations correspondant à l'ordre de récupération d'instruction, comprend :
le démarrage de la lecture de micro-opérations à partir d'une file d'attente de micro-opérations correspondant à un groupe de décodeurs par défaut ; et dans un cas où une micro-opération lue à laquelle est fixée l'étiquette de commutation, la détermination d'une file d'attente de micro-opérations suivante à commuter pour une lecture de micro-opération, selon l'étiquette de commutation fixée à la micro-opération, jusqu'à ce que les micro-opérations dans les files d'attente de micro-opérations correspondantes des groupes de décodeurs respectifs soient entièrement lues ; et
dans un cas où la micro-opération lue à laquelle est fixée l'étiquette de commutation, la détermination d'une file d'attente de micro-opérations suivante à commuter pour une lecture de micro-opération, selon l'étiquette de commutation fixée à la micro-opération, comprend :
dans le cas où la micro-opération lue à laquelle est fixée l'étiquette de commutation, la commutation séquentielle de files d'attente de micro-opérations pour une lecture de micro-opération, parmi des files d'attente de micro-opérations des groupes de décodeurs respectifs dans un ordre des files d'attente de micro-opérations, selon l'étiquette de commutation attachée à la micro-opération.

10. Processeur, comprenant :
une unité de prédiction de branche (101), configurée pour générer une demande de récupération d'instruction, dans lequel la demande de récupération d'instruction porte au moins une étiquette de commutation, et l'étiquette de commutation indique au moins une position d'instruction pour réaliser une commutation de groupe de décodeurs ;
une mémoire cache d'instructions (102), configurée pour acquérir un flux d'instructions récupéré par la demande de récupération d'instruction en réponse à une micro-opération qui est obtenue sous forme décodée par un groupe de décodeurs, et déterminer la position d'instruction pour réaliser une commutation de groupe de décodeurs dans le flux d'instructions selon l'étiquette de commutation portée par la demande de récupération d'instruction ;
une unité d'attribution d'instructions (201), configurée pour attribuer le flux d'instructions à une pluralité de groupes de décodeurs pour un décodage parallèle selon la position d'instruction ;
un groupe de décodeurs, configuré pour décoder des instructions attribuées pour obtenir des micro-opérations, dans lequel un nombre total du groupe de décodeurs est pluriel, et lorsque le groupe de décodeurs décode une instruction cible, une étiquette de commutation est fixée à une micro-opération cible obtenue par décodage de l'instruction cible, et l'instruction cible est une instruction correspondant à la position d'instruction ; **caractérisé par**
une mémoire cache de micro-opérations (104), configurée pour acquérir une micro-opération correspondant à la demande de récupération d'instruction auprès de la mémoire cache de micro-opérations (104), en réponse à une micro-opération obtenue par recherche par la mémoire cache de micro-opérations (104), dans un cas où la demande de récupération d'instruction est atteinte dans la mémoire cache de micro-opérations (104), dans lequel la micro-opération acquise n'est pas n'a pas d'étiquette de commutation fixée à celle-ci,
dans lequel le processeur comprend une pluralité de modes de décodage, et la pluralité de modes de décodage comprennent un mode décodeurs et un mode mémoire cache de micro-opérations, le mode décodeurs obtient une micro-opération par décodage par un groupe de décodeurs, et le mode mémoire cache de micro-opérations obtient une micro-opération par recherche par la mémoire cache de micro-opérations,
dans le mode mémoire cache de micro-opérations, l'unité de prédiction de branche (101) envoi la demande de récupération d'instruction portant ladite au moins une étiquette de commutation à la mémoire cache de micro-opérations ; et
dans le mode mémoire cache de micro-opérations, une file d'attente de micro-opérations correspondant à un groupe de décodeurs est déterminée, selon qu'une dernière instruction décodée par un groupe de décodeurs présente une position d'instruction indiquée par une étiquette de commutation correspondante avant la commutation du mode de décodage en mode mémoire cache de micro-opérations, pour stocker une micro-opération obtenue.

11. Processeur selon la revendication 10, dans lequel la position d'instruction est une position finale de l'instruction cible ; et la détermination, par la mémoire cache d'instructions (102), de la position d'instruction pour réaliser une commutation de groupe de décodeurs dans le flux d'instructions selon l'étiquette de commutation portée par la demande de récupération d'instructions, comprend :
la détermination de la position finale de l'instruction cible dans le flux d'instructions en fonction de la position d'instruction indiquée par l'étiquette de commutation portée par la demande de récupération d'instruction.

12. Processeur selon la revendication 10 ou 11, dans lequel l'attribution, par l'unité d'attribution d'instructions (201), du flux d'instructions à une pluralité de groupes de décodeurs pour un décodage parallèle selon la position d'instruction, comprend :
la division, par l'unité d'attribution d'instructions (201), du flux d'instructions selon la position d'instruction pour obtenir une pluralité de groupes d'instructions, et l'attribution de la pluralité de groupes d'instructions à la pluralité de groupes de décodeurs pour un décodage parallèle ;
la division, par l'unité d'attribution d'instructions (201), du flux d'instructions selon la position d'instruction pour obtenir une pluralité de groupes d'instructions, comprend :
la division, par l'unité d'attribution d'instructions(201), du flux d'instructions en une pluralité de groupes d'instructions avec la position d'instruction comme frontière dans le flux d'instructions, dans lequel une instruction cible qui sert de frontière dans deux groupes d'instructions adjacents est regroupée dans un groupe d'instructions précédent ; et
l'attribution, par l'unité d'attribution d'instructions (201), d'un groupe de décodeurs pour un groupe d'instructions suivant selon une étiquette de commutation correspondant à l'instruction cible regroupée dans le groupe d'instructions précédent, et un groupe de décodeurs attribué pour le groupe d'instructions précédent étant différent d'un groupe de décodeurs attribué pour le groupe d'instructions suivant ;
un groupe de décodeurs est doté de même d'une file d'attente d'instructions pour sauvegarder des instructions à décoder ; et
l'attribution, par l'unité d'attribution d'instructions (201), d'un groupe de décodeurs pour un groupe d'instructions suivant selon une étiquette de commutation correspondant à l'instruction cible regroupée dans le groupe d'instructions précédent, et un groupe de décodeurs attribué pour le groupe d'instructions précédent étant différent d'un groupe de décodeurs attribué pour le groupe d'instructions suivant, comprend :
la sauvegarde, par l'unité d'attribution d'instructions (201), d'un premier groupe d'instructions parmi la pluralité de groupes d'instructions dans une file d'attente d'instructions correspondant à un groupe de décodeurs par défaut ; et
la détermination, par l'unité d'attribution d'instructions (201), d'un groupe de décodeurs parmi la pluralité de groupes de décodeurs qui est différent du groupe de décodeurs attribué pour le groupe d'instructions précédent, pour un groupe d'instructions qui n'est pas le premier parmi la pluralité de groupes d'instructions, selon l'étiquette de commutation correspondant à l'instruction cible dans le groupe d'instructions précédent, et la sauvegarde du groupe d'instructions qui n'est pas le premier dans une file d'attente d'instructions correspondant au groupe de décodeurs déterminé.

13. Processeur selon l'une des revendications 10 à 12, comprenant en outre :
une unité de fusion, configurée pour fusionner des micro-opérations obtenues sous forme décodées par la pluralité de groupes de décodeurs, dans un mode décodeurs, selon l'étiquette de commutation fixée à la micro-opération cible, pour obtenir des micro-opérations correspondant à un ordre de récupération d'instruction, dans lequel le mode décodeurs obtient une micro-opération par décodage par un groupe de décodeurs ;
un groupe de décodeurs est doté de même d'une file d'attente de micro-opérations ; le groupe de décodeurs est en outre configuré pour sauvegarder des micro-opérations décodées dans des files d'attente de micro-opérations correspondantes ;
la fusion, par l'unité de fusion, de micro-opérations obtenues sous forme décodées par la pluralité de groupes de décodeurs, selon l'étiquette de commutation fixée à la micro-opération cible, pour obtenir des micro-opérations correspondant à un ordre de récupération d'instruction, comprend :
la fusion des micro-opérations d'une manière commutée entre les files d'attente de micro-opérations correspondant à des groupes de décodeurs respectifs, selon l'étiquette de commutation fixée à la micro-opération cible, pour obtenir les micro-opérations correspondant à l'ordre de récupération d'instruction ;
la mémoire cache de micro-opérations (104) est en outre configurée pour sauvegarder une micro-opération obtenue dans une file d'attente de micro-opérations correspondant à un groupe de décodeurs par défaut, dans un mode mémoire cache de micro-opérations, dans lequel le mode mémoire cache de micro-opérations obtient une micro-opération par recherche par la mémoire cache de micro-opérations (104) ;
le groupe de décodeurs est en outre configuré pour sauvegarder les micro-opération décodées dans la mémoire cache de micro-opérations (104) ; et
dans un cas où la demande de récupération d'instruction n'est pas atteinte dans la mémoire cache de micro-opérations (104) en mode mémoire cache de micro-opérations, le mode décodeurs est entré.

14. Puce, comprenant le processeur selon l'une des revendications 10 à 13.

15. Dispositif électronique, comprenant la puce selon la revendication 14.
